# EUROPEAN PATENT SPECIFICATION

(11) **EP 3 355 248 B1**
(45) Date of publication and mention of the grant of the patent: **18.12.2024**
(21) Application number: 18150475.4
(22) Date of filing: 05.01.2018
(51) Int. Cl.: G06N 5/04, G06N 20/00, G06F 21/62, G06F 21/60, G06F 16/35

(54) **SECURITY CLASSIFICATION BY MACHINE LEARNING**
SICHERHEITSEINSTUFUNG DURCH MASCHINENLERNEN
CLASSIFICATION DE SÉCURITÉ PAR APPRENTISSAGE MACHINE

(30) Priority: 06.01.2017 US 201715400112; 06.01.2017 US 201715400298
(43) Date of publication of application: 01.08.2018
(73) Proprietor: Accenture Global Solutions Limited, Dublin 4 (IE)
(72) Inventor: LUO, Song, Gaithersburg, MD 20878 (US); SALEM, Malek Ben, Falls Church, VA 22041 (US)
(74) Representative: Strange, Harry George

(56) References cited:
- US-A1- 2011 004 573
- US-A1- 2015 254 469
- US-B1- 8 244 651
- US-B1- 9 514 414

## Description

### FIELD

The present specification is related to classification of electronic data items.

### BACKGROUND

Computer networks include multiple computing assets that enable individuals or users to access shared resources including a variety of digital content and electronic data items. Various entities such as private corporations, clandestine services and defense organizations can have large networked data sets that include a variety of electronic documentation. These electronic documents can include sensitive information. The sensitive data content or other attributes associated with the documents can require network users within the various entities to apply a particular security label or classification to the electronic document.

US 2011/0004573 A1 discloses a method of identifying a training document for a content classifier.

US 9514414 B1 discloses a computer implemented system for identifying and categorizing electronic documents through machine learning. A seed set of categorized electronic documents is used to train a document categorizer based on a machine learning algorithm. The trained document categorizer categorizes electronic documents in a large corpus of electronic documents. Performance metrics associated with performance of the trained document categorizer are tracked, and additional seed sets of categorized electronic documents are used to improve the performance of document categorizer by retraining the document categorizer on subsequent seed sets. Additional seed sets and categorizations are iterated through until a desired document categorization performance is reached.

### SUMMARY

The subject matter described in this specification relates to systems and methods that utilize machine learning logic to generate one or more classification models for determining a security classification or label for electronic documents. The described subject matter includes use of at least one of: data contents of the electronic document to generate a data contents classification model, metadata associated with the document to generate at least one metadata classification model, or an environment context of the electronic document to generate a dataset that includes multiple contextual factors. The data contents classification model, the at least one metadata classification model, and at least one contextual factor can each correspond to a respective weight parameter. Each of the respective weight parameters is used to generate one or more final classification models for determining security classifications for a variety of different electronic documents.

One aspect of the subject matter described in this specification is embodied in a computer-implemented method as defined in claim 1. The method includes, receiving, by a computing system, a plurality of electronic data items comprising content data and having a security classification, the plurality of electronic data items includes an electronic document comprising text based content and a plurality of attributes. The method includes scanning, by the computing system, the electronic document to identify text based content data associated with a particular document security classification; and generating, by the computing system, a first inference model based on the received content data and the identified text based content data. The method also includes receiving, by the computing system, metadata associated with respective data items of the plurality of data items The method includes scanning, by the computing system, the electronic document for metadata corresponding to a particular attribute associated with the particular document security classification; and generating, by the computing system, a second inference model based on the received metadata associated with the respective data items and the particular attribute. The method further includes determining, by the computing system and based on the first inference model, a first weight parameter associated with the content data; and determining, by the computing system and based on the second inference model, a second weight parameter associated with the metadata. The method includes generating, by the computing system and based on at least one of the first weight parameter or the second weight parameter, a classification model for determining a classification of at least one data item of the plurality of data items. The method also includes using the classification model to determine a security classification of at least one further electronic data item; establishing and/or adjusting at least one user access privilege to the at least one further electronic data item based on the security classification; and encrypting the at least one further electronic data item based on the security classification.

These and other implementations can each optionally include one or more of the following features. For example, in some implementations, the method further includes, receiving, by the computing system, context data for generating one or more contextual factors associated with the respective data items of the plurality of data items; determining, by the computing system, a third weight parameter based on at least one contextual factor of the one or more contextual factors associated with the respective data items; and wherein generating the classification model for determining the classification of the at least one data item is further based on the third weight parameter.

In some implementations, generating the classification model includes, using, by the computing system, one or more machine-learning processes to generate the classification model for determining the classification of the at least one data item, wherein at least one of the first weight parameter or the second weight parameter is used by at least one machine-learning algorithm to generate the classification model.

In some implementations, the method further includes, using, by the computing system, the first inference model to infer a first probability factor that the identified text based content indicates a particular document classification, the first probability factor corresponding to the first weight parameter.

In some implementations, the method further includes, using, by the computing system, the second inference model to infer a second probability factor that the particular attribute indicates a particular document classification, the second probability factor corresponding to the second weight parameter. In some implementations, the method further includes, determining, by the computing system, the classification of the at least one data item using the classification model; validating, by a data validator, that the classification of the at least one data item determined using the classification model is a correct classification relative to particular content of the at least one data item; and providing, by the computing the system, the classified data item for display on a computing device accessible by a user.

In some implementations, the method further includes, determining, by the computing system, the classification of the at least one data item using the classification model, the classification including at least one of a sensitive classification, a confidential classification, a secret classification, or a top secret classification.

At least one computing system is described that generates a first classification model for determining a security classification of data items such as electronic files or documents including text and image content. The first classification model can be generated using at least baseline content data or baseline metadata that are extracted from the documents. The system receives modified and/or new content data that indicates changes to the baseline content data as well as modified and/or new metadata that indicates changes to the baseline metadata.

The system generates an impact metric based on at least the modified content data or the modified metadata. The impact metric can estimate an impact to the accuracy of the security classifications determined by the first model. The system compares the impact metric to a threshold impact metric to determine whether the impact metric exceeds the threshold metric. In response to the impact metric exceeding the threshold impact metric, the system generates a second classification model for determining a classification of the data item.

Another unclaimed aspect of the subject matter described in this specification can be embodied in a computer-implemented method. The method includes, generating, by a computing system, a first classification model for determining a classification of a data item, the first classification model being generated using at least one of baseline content data or baseline metadata. The method further includes, receiving, by the computing system, modified content data indicating a change to the baseline content data used to generate the first classification model, the modified content data corresponding to content of the data item; and receiving, by the computing system, modified metadata indicating a change to the baseline metadata used to generate the first classification model, the modified metadata corresponding to an attribute of the data item. The method further includes, generating, by the computing system, an impact metric associated with an attribute of the first classification model, the impact metric being based on at least one of the modified content data or the modified metadata; comparing, by the computing system, the generated impact metric to a threshold impact metric; and determining, by the computing system, that the generated impact metric exceeds the threshold impact metric. The method further includes, generating, by the computing system, a second classification model for determining a classification of the data item, the second classification model being generated in response to the impact metric exceeding the threshold impact metric.

These and other implementations can each optionally include one or more of the following features. For example, in some implementations, the method further comprises: receiving, by the computing system, user data indicating an assessment of one or more data item classifications determined by the first classification model; and generating, by the computing system, the impact metric associated with the attribute of the first classification model, the impact metric being based on the received user data.

In some implementations, the method further comprises: receiving, by the computing system, modified context data associated with one or more modified contextual factors that indicate a change to baseline contextual factors used to generate the first classification model; and generating, by the computing system, the impact metric associated with the attribute of the first classification model, the impact metric being based on the modified context data. In some implementations, the impact metric indicates at least one of: an estimate of an impact scope; a probability of the first classification model determining an inaccurate classification; or a cost estimate associated with generating the second classification model.

In some implementations, the impact scope corresponds to at least one of: an estimate of the extent to which modified content data differs from the baseline content data that is used to generate the first classification model; an estimate of the extent to which modified metadata differs from the baseline metadata used to generate the first classification model; or an estimate of the extent to which modified context data differs from the baseline context data used to generate the first classification model.

In some implementations, the data item is an electronic document including text based content, and the method further comprises: scanning, by the computing system, the electronic document to identify text based content data associated with a particular document classification; and generating, by the computing system, one of the first classification model or the second classification model based on the identified text based content data.

In some implementations, the generated impact metric is associated with a parameter value, and determining that the generated impact metric exceeds the threshold impact metric comprises: determining, by the computing system, that the parameter value exceeds a threshold parameter value. In some implementations, the data item is an electronic document including a plurality of attributes, and the method further comprises: scanning, by the computing system, the electronic document for metadata corresponding to a particular attribute associated with a particular document classification; and generating, by the computing system, one of the first classification model or the second classification model based on the particular attribute.

In some implementations, generating the first classification model includes using machine learning logic to train the first classification model to determine the classification of the data item; and generating the second classification model includes using the machine learning logic to retrain the first classification model to determine the classification of the data item, the first classification model being retrained based on at least one of the modified content data or the modified metadata. In some implementations, generating the second classification model further comprises: retraining, by the computing system, the first classification model in response to the generated impact metric exceeding the threshold impact metric.

Other implementations of the above and other aspects include corresponding systems, apparatus, and computer programs as defined claims 9 and 10, configured to perform the actions of the methods, encoded on computer storage devices. An electronic system of one or more computers can be so configured by virtue of software, firmware, hardware, or a combination of them installed on the electronic system that in operation cause the system to perform the actions. One or more computer programs can be so configured by virtue of having instructions that, when executed by data processing apparatus, cause the apparatus to perform the actions.

The subject matter described in this specification can be implemented in particular embodiments to realize one or more of the following advantages. Techniques are described for enhancing electronic document security using security classification models that are generated based on machine learned inferences. Machine learning software processes are used for training and re-training security classification models to continuously enhance security classification determinations performed by the security classification model. Computers in networked systems can use the security classifications to enhance data security in a computer network. For example, networks can use the security classification models to establish and/or adjust user access privileges to certain electronic documents based on the security classifications.

The described techniques can represent a specific set of computer-implemented rules for generating security classification models, efficiently determining security classifications for electronic data using the security classification model, and retraining security classification models to continuously enhance and improve the accuracy of security classification determinations. The described subject-matter enables the automation of specific computer-related security classification determinations and data access tasks that previously could not be performed by computer systems in an efficient manner. Techniques in this document improve computer-based classification determinations by using machine learning processes to analyze existing document and classification data to train and retrain classification models.

Trained models can quickly and efficiently analyze electronic documents to set security classification levels and document access controls in accordance with the security classification of the document. Further, the described techniques provide a repeatable automated process that involves minimal human intervention and does not require manual execution of data analysis to determine security classifications and data access controls. As such, the techniques enable computing systems to perform operations that the systems were previously unable to automatically perform due to the challenges of: i) analyzing large amounts of electronic data to accurately and efficiently determine security classifications for the data; and ii) setting appropriate access controls for discrete data items in accordance with their security classification.

The details of one or more implementations of the subject matter described in this specification are set forth in the accompanying drawings and the description below. Other potential features, aspects, and advantages of the subject matter will become apparent from the description, the drawings, and the claims.

### BRIEF DESCRIPTION OF THE DRAWINGS

FIG. 1 illustrates a block diagram of an example computing system for generating at least one final model for determining security classifications.
FIG. 2 illustrates a block diagram of an example computing system for validation of one or more determined security classifications for electronic data items.
FIG. 3 illustrates a block diagram of an example computing system for determining policy recommendations.
FIG. 4 illustrates a block diagram of an example computing system for determining security classifications for electronic data items by way of an online processing interface.
FIG. 5 illustrates a flowchart of an example process for determining security classifications of one or more electronic data items.
FIG. 6 illustrates a block diagram of an example computing system for generating an updated classification model.
FIGs. 7A and 7B illustrate block diagrams of example computing systems including multiple modules that interact to generate an updated classification model.
FIG. 8 illustrates a block diagram of an example computing system that includes model training used to generate an updated classification model.
FIG. 9 illustrates a flowchart of an example process for generating an updated classification model.

Like reference numbers and designations in the various drawings indicate like elements.

### DETAILED DESCRIPTION

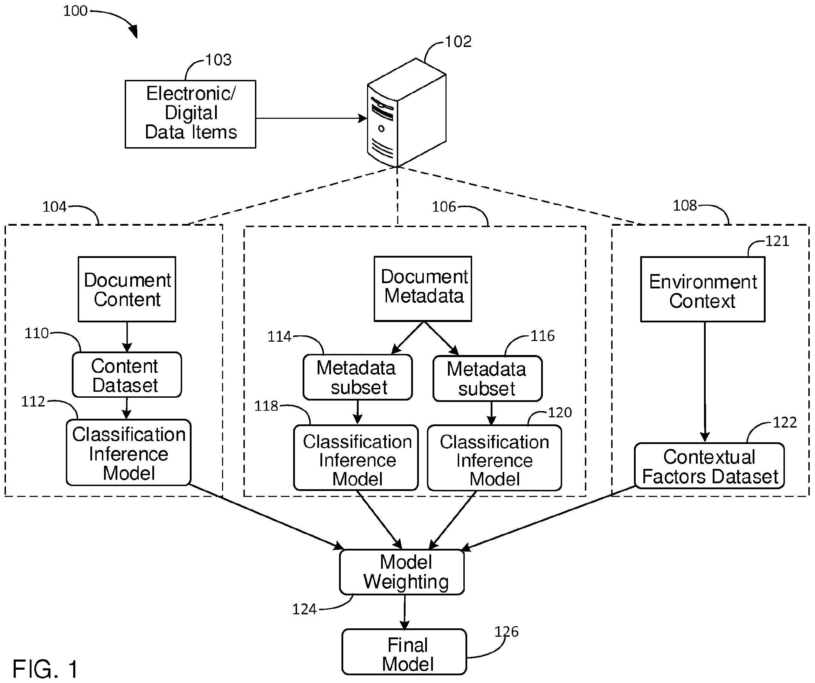

This specification describes systems and methods for generating security classification models and for determining a security classification or label for electronic documents using a classification model, as described below with reference to the systems and methods of FIG. 1 through FIG. 5. The described systems and methods use machine learning logic to generate one or more classification models and further use extraction logic to generate at least one dataset that can include multiple contextual factors. The system can provide, for each model, respective weight parameters that are determined by a model weighting module. Additionally, at least one contextual factor can correspond to another weight parameter that is also determined by the model weighting module. A final classification model can be generated from the weighting module based on the multiple weight parameters. The final classification model is used to determine a security classification of one or more electronic documents.

The one or more classification models can include processing devices that execute machine learning algorithms to generate learned inferences based on received datasets. For example, a first classification model can receive datasets corresponding to text based content of an electronic document. In another example, a second classification model can receive datasets corresponding to metadata attributes associated with an electronic document. The metadata attributes can include attributes such as an author of the electronic document or a business category of the document. The at least one contextual factor can include factors such as a current security policy or organizations that are affiliated with the electronic document.

The learned inferences by the first classification model can associate a particular security classification with certain reoccurring text scanned or extracted from datasets related to text based content. A particular weight parameter can be generated to indicate a probability that a particular document that includes certain text content should receive a particular security classification. Likewise, learned inferences by the second classification model can associate a particular security classification with certain reoccurring attributes scanned or extracted from datasets related to metadata. A weight parameter can be generated to indicate a probability that a document including certain metadata attributes should receive a particular security classification.

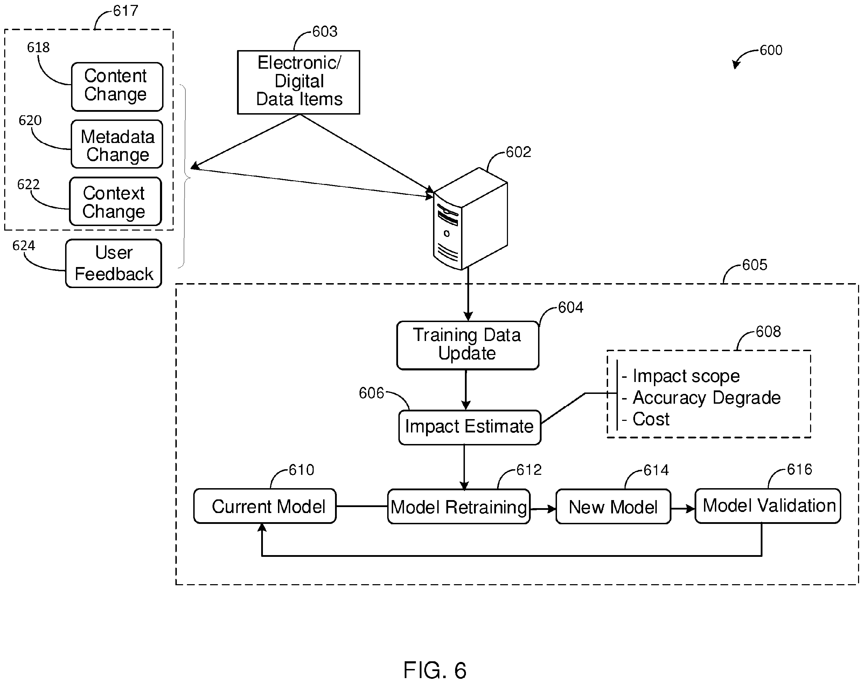

This specification also describes systems and methods for retraining a classification model that can be used to determine a security classification/label for electronic documents, as described below with reference to the systems and methods of FIG. 6 through FIG. 9. The subject matter described in this specification further relates to methods and systems that utilize machine learning logic to generate a first/initial current classification model for determining a security classification or label for electronic data items such as digital/electronic documents. The system can be implemented in an example computing network that includes a multitude of electronic documents and metadata attributes. The initial classification model can be generated using a baseline dataset of content data and metadata.

Over time, changes such as revisions, additions, deletions, or various other modifications to the baseline content used to generate the first classification model may necessitate that a new or updated classification model be generated to replace the first model. An impact metric can be analyzed and compared to a threshold impact metric to determine when to trigger an update or retraining of the first model. When the impact metric exceeds the threshold metric, the machine learning logic can be used to retrain the first classification model to generate a second classification model to replace the first model.

FIG. 1 illustrates a block diagram of an example computing system 100 for generating at least one final model for determining security classifications. As used in this specification, while security classification and security label are synonymous, in some stances references to security classification can include an example classification operation performed by system 200 to generate a security label for a document.

System 100 includes a computing device 102 that can receive multiple electronic/digital data items 103 as well as data associated with the electronic items such as context data and metadata. Computing device 102 can include one or more different computing devices such as computing servers or a variety of different cloud-based computer systems. Further, computing device 102 can include multiple processing units, computer storage mediums, and/or computing modules configured to execute computer program code, machine readable instructions, or logic algorithms.

As shown, computing device 102 can include a content module 104, a metadata module 106, a context module 108, and a model weighting module 124. As described in more detail below, the respective modules of system 100 cooperate to produce a final model 126 for determining classifications for one or more electronic data items 103. As used in this specification, electronic/digital data items 103 can include various digital computer based files or electronic documents such as documents produced by Microsoft Office^{®} application programs. The electronic documents can include a variety of content such as text content, image content, video content. The electronic documents/files can be also associated with a variety of file formats.

In some implementations, computing device 102 can include additional or fewer modules and system 100 can include one or more additional computing devices or related server devices. The modules of system 100 can be associated with computing device 102 and, for example, can be disposed within device 102. In alternative implementations, the modules of system 100 can include independent computing devices that are coupled to, and in data communication with, device 102.

Modules 104, 106, and 108 are representative of machine learning, neural network inference computations, and/or data extraction and analysis functions that can be executed by device 102. As used in this specification, the term "module" is intended to include, but is not limited to, one or more computers configured to execute one or more software programs that include program code that causes a processing device(s) or unit(s) of the computer to execute one or more functions. The term "computer" is intended to include any data processing device, such as a desktop computer, a laptop computer, a mainframe computer, a personal digital assistant, a server, a handheld device, or any other device able to process data.

Computing device 102 and modules 104, 106, and 108 can each include processing units or devices that can include one or more processors (e.g., microprocessors or central processing units (CPUs)), graphics processing units (GPUs), application specific integrated circuits (ASICs), or a combination of different processors. In alternative embodiments, device 102 and modules 104, 106, and 108 can each include other computing resources/devices (e.g., cloud-based servers) that provide additional processing options for performing one or more of the machine learning determinations and calculations described in this specification.

The processing units or devices can further include one or more memory units or memory banks. In some implementations, the processing units execute programmed instructions stored in memory to cause device 102 and modules 104, 106, and 108 to perform one or more functions described in this specification. The memory units/banks can include one or more non-transitory machine-readable storage mediums. The non-transitory machine-readable storage medium can include solid-state memory, magnetic disk, and optical disk, a random access memory (RAM), a read-only memory (ROM), an erasable programmable read-only memory (e.g., EPROM, EEPROM, or Flash memory), or any other tangible medium capable of storing information.

Content module 104 includes a content dataset 110 that can be used to generate classification inference model 112. Content dataset 110 can include a subset of electronic data items 103 provided to device 102. In some implementations, a processing unit of module 104 can execute program code to scan the subset of data items 103 for content that can be used to generate or build an initial classification model 112.

For example, system 100 can be deployed or launched in an example computing network and initiate scans and analysis of multiple electronic data items 103 that have either: 1) existing security labels; or 2) no security labels. The multiple electronic data items 103 can be stored in an example document repository of the computing network. For a subset of data items 103 that form content dataset 110, module 104 can execute program code to scan, detect, retrieve or otherwise extract text, image or other content associated with the subset of data items. Further, for documents that include existing security labels, module 104 can also scan, detect, retrieve or otherwise extract current security labels/classifications of each data item 103 of dataset 110.

In some implementations, module 104 can associate certain text content with a particular security classification based on, for example, the text content occurring within multiple data items 103 in excess of a threshold amount. Content module 104 can execute embedded machine learning logic to iteratively train model 112 and to generate or build subsequent iterations of model 112 that are used by system 100 to generate one or more classification inferences.

For example, module 104 can scan or analyze an electronic document to detect text content including one or more key words or n-grams that correspond to a particular security label or security classification. The analyzed text, key words, or n-grams can also be extracted and/or stored within a memory unit of module 104 and referenced during execution of the one or more iterative training processes.

As used in this specification, an n-gram can be a contiguous sequence of text content extracted from a particular sequence of electronic text and/or speech. The text content can be associated with syllables, letters, words or base pairs that can be collected from a text corpus. Further, as used in this specification, and with reference to module 104, an example classification model or classification inference model can include one or more relational data sets or data structures that associate, for example, particular text content with a corresponding security label. In some implementations, the relational data sets can be produced or generated based on module 104 executing one or more machine learning algorithms.

In some implementations, module 104 can use computing processes to infer a probability factor. The computing processes can include outputs of machine learning inference computations that generate at least one initial classification inference model 112. The probability factor can indicate a certain likelihood that identified text content corresponds to a particular document security classification or label. The probability factors of inference model 112 can be used by model weighting module 124 to generate final classification model 126.

Metadata module 106, includes at least one subset of metadata 114, 116 that can each be used to generate at least one classification inference model 118, 120. Metadata module 106 can include data processing and computing functions that are substantially similar to the processing and computing functions of content module 104. Hence, metadata subset 114, 116 can likewise include a subset of the electronic/digital data items 103 provided to device 102. Stated another way, in some implementations, a subset of the data items 103 provided to device 102 can be analyzed by module 106. In response to the performed analysis, metadata attributes can be extracted to form respective metadata subsets 114 and 116.

In some implementations, the subset of data items 103 included in module 106 can be the same as the subset of data items 103 included in module 104. In alternative implementations, modules 104 and 106 can include different data items 103 or can include at least one data item that is the same between each of modules 104 and 106. In some implementations, a processing unit of module 106 can execute program code to scan, detect, retrieve or otherwise extract metadata content associated with the subset of data items 103 included in metadata subsets 114, 116. The extracted metadata that can be used to generate or build at least one initial classification model 118, 120.

For example, as noted above, system 100 can be deployed or launched in an example computing network and initiate scans and analysis of multiple electronic data items 103 that have either: 1) existing security labels; or 2) no security labels. Module 106 can scan, detect, retrieve or otherwise extract the current security labels/classifications of each of the multiple electronic data items. Further, module 106 can associate certain metadata attributes with a particular security classification based on, for example, the metadata attribute being associated with multiple data items 103 in excess of a threshold amount.

Metadata module 106 can execute embedded machine learning logic to iteratively train models 118, 120 and to generate or build subsequent iterations of models 118, 120 that are used by system 100 to generate one or more classification inferences. For example, module 106 can scan or analyze an electronic document to detect metadata that can include certain document attributes that correspond to a particular security label or security classification. The analyzed metadata can also be extracted and/or stored within a memory unit of module 106 and referenced during execution of the one or more iterative training processes.

As used in this specification, metadata can include a variety of electronic data item attributes such as: a data item author, creator, or originator; a data item file type or file extension; intended clients or intended recipients of the data item; a data item title; data item creation date; a business organization associated with the data item; or any other metadata or data item attribute typically associated with electronic or digital files or documents.

Much like classification inference model 112, classification model or classification inference models 118, 120 can each include one or more relational data sets or data structures that associate, for example, particular metadata attributes with a corresponding security label. In some implementations, these relational data sets can be produced or generated based on module 106 executing one or more machine learning algorithms.

In some implementations, module 106 can use computing processes to infer a probability factor associated with each of models 118 and 120. The computing processes can include outputs of machine learning inference computations that generate at least one respective initial classification inference model 118, 120. This probability factor can indicate a certain likelihood that identified metadata corresponds to a particular document security classification or label. The probability factors of inference models 118, 120 can be used by model weighting module 124 to generate classification model 126.

Context module 108 includes environment context 121 that can be used to generate contextual factors dataset 122. In some implementations, context module 108 can include data processing and computing functions that are similar to the processing and computing functions of modules 104 and 106. Hence, contextual factors dataset 122 can likewise include a subset of the electronic/digital data items 103 provided to device 102. Stated another way, in some implementations, a subset of the data items 103 provided to device 102 can be used to form environment context 121. Context 121 can be analyzed by module 108 and, in response to the performed analysis, contextual factors can be extracted or inferred to form at least one contextual factors dataset 122.

In some implementations, the subset of data items 103 included in module 108 can be the same as the subset of data items 103 included in modules 104 or 106. In alternative implementations, modules 104, 106, and 108 can include different data items 103 or can include at least one data item that is the same between each of modules 104, 106, 108. In some implementations, a processing unit of module 108 can execute program code to infer, detect, retrieve or otherwise obtain multiple contextual factors associated with the subset of data items 103 forming environment context 121.

As used in this specification, environment contexts can relate to or include a variety of data that indicate a particular business context, policy context, or organizational affiliation of at least one electronic data item 103. Moreover, contextual factors can be a sub-context of a particular environment context. For example, data or correspondences relating to a pending business merger can indicate a particular business related contextual factor such as mergers and acquisitions (M&A).

Another contextual factor may correspond to a particular business entity or organization affiliated with the M&A correspondence. Likewise, another contextual factor may correspond to one or more policy documents owned/enforced by the entity. The one or more policy documents can specify how certain electronic data items should be managed, stored, or classified. For example, at least one policy document may specify or require that correspondences related to pending business mergers shall be classified as secret or sensitive.

As noted above, in some implementations, system 100 can scan and analyze multiple electronic data items 103 that have either existing security labels or no security labels. Module 108 can scan, detect, retrieve or otherwise extract the current security labels/classifications of each of the multiple data items 103 associated with environment context 121. Further, module 108 can associate certain contextual factors with a particular security classification based on, for example, the contextual factors being associated with multiple data items 103 in excess of a threshold amount. Alternatively, in some instances, module 108 can associate certain contextual factors with a particular security classification based on the contextual factor being related to a particular policy context.

In some implementations, contextual factors dataset 122 can include a database of identified or inferred contextual factors and any respective corresponding classification labels. In some implementations, module 108 can execute program code to analyze one or more relations between stored contextual factors and any corresponding security classifications that are linked to a particular contextual factor. In response to analyzing the one or more relations, module 108 can determine, infer, and/or generate a probability factor.

The probability factor can correspond to a weight/influence parameter that indicates a certain likelihood that identified relations correspond to a particular document security classification or label. The probability factor can be used by model weighting module 124 to generate classification model 126. In some implementations, system 100 includes three data channels/paths that provide respective probability factors for determining weight parameters by model weighting module 124 to generate final classification model 126.

Weighting module 124 can be configured to aggregate and analyze the received inference models or probability factors that correspond to the inference models. Weighting module 124 can then determine or calculate an accuracy metric associated with each inference model. In some implementations, weighting module 124 receives accuracy metrics from modules 104, 106, and 108. With guidance from data scientists (described below), module 124 can then determine weight parameters for the respective models generated by modules 104, 106, and 108.

In some instances, models with a higher accuracy metric will receive heavier/larger weighting relative to models with lower accuracy metrics. Weights of all models will sum to 1.0. For example, inference model 112 can receive a 0.5 weighting, inference models 118, 120 can receive an aggregate 0.3 weighting, and a model for dataset 122 can receive a 0.2 weighting. Final model 126 is generated using a particular combination of weight parameters for the respective models. In some implementations, multiple iterations of trial and error may be needed to identify the optimal combination of weight parameters.

In some implementations, the accuracy metrics can be determined, at least in part, based on manual input to system 100 from at least one data validator. For example, and as discussed in more detail below, a data validator can be used to analyze and validate one or more classification inferences generated by content classification model 112 and metadata classification models 118, 120. Likewise, the data validator can be used to analyze and validate the database relations used by module 108 to generate the weight parameter.

In some implementations, system 100 can generate one or more validation datasets. For example, system 100 can generate at least: a first validation dataset that includes a subset of classification inferences generated by classification inference model 112; and a second validation dataset that includes a subset of classification inferences generated by classification inference models 118, 120. The validation datasets include one or more classification inferences generated by models 112, 118, 120.

In some implementations, the data validator validates classification inferences that associate certain word combinations with particular security classifications. For example, during model training to generate inference model 112, content data scanned from multiple data items 103 of dataset 110 can indicate that the word combination "white house" is substantially, or generally, associated with data items that have an existing security classification of "top secret." Thus, the data validator will validate an example classification inference in the first validation dataset that links or associates the scanned or extracted content "white house" to the security label "top secret."

Similarly, the data validator validates classification inferences that associate certain metadata attributes with particular security classifications. For example, during model training to generate inference models 118, 120, metadata extracted from multiple data items 103 of metadata subsets 114, 116 can indicate that documents originating from the Finance department primarily have an existing security classification of "sensitive." Thus, the data validator will validate an example classification inference in the second validation dataset that links or associates the extracted metadata "Finance Department" to the security label "sensitive."

In some implementations, weighting module 124 determines an accuracy metric for the weight parameter linked to inference model 112 based on validation analysis of the first validation dataset. Likewise, weighting module 124 determines an accuracy metric for the weight parameter linked to inference models 114, 116 based on validation analysis of the second validation dataset. Further, weight module 124 can determine an accuracy metric for the weight parameter linked to the contextual factors 122 based on validation analysis of generated datasets that include context factors and corresponding security labels.

Weighting module 124 uses accuracy metrics to generate final weight parameters that correspond to analyzed content data, analyzed metadata, and analyzed contextual factors. The final weight parameters are used to generate a final classification model 126. Final model 126 can be deployed within an example computing network and appropriately tuned to generate accurate security classification labels of existing electronic data items 103 as well as newly created electronic data items.

As an example to illustrate the operation of system 100, device 102 can connect to an electronic document repository of an example computer network. The document repository can have several Word documents or PowerPoint files that relate to a variety of topics (intelligence, defense, mergers, divestitures, drone technology, etc.). The several word documents and presentation files can have existing security labels that indicate a classification of the documents/files. For example, some documents may have a "top secret" security label, while some may have a "sensitive" security label. These documents can have access controls that align with the security label to restrict access rights to these documents in accordance with their security labels.

Like most documents, the word files and presentation files will include a variety of words or phrases. In some instances, documents may reside in electronic file folders that indicate the document is affiliated with the Finance, Accounting, Classified programs, or Military programs department. Further, like most Microsoft Word files, some documents can include metadata that is detectable through, for example, the properties function of the file.

Example metadata viewable when examining document properties include document title, file name, authors, date created, date modified, content type, or folder path. These document property items can be described as metadata attributes. Likewise, electronic file folder headings and other information that indicates a document's affiliation with a certain department or program can be described as a context factor.

When system 100 is launched within the example network, device 102 connects to the repository to scan each document/file and extract words or phrases from each word document/presentation file, extract metadata, extract context factors, and extract existing security labels. Extracted words or phrases can form content dataset 110, extracted metadata can form at least one metadata subset 114, 116, and extracted context factors can form dataset 122.

The inference models use machine learning logic to form associations between words/phrases in dataset 110 that were extracted from particular documents and the security labels of those documents. Through machine learning analysis of multiple extracted words and associated document security labels, device 102 forms reliable and accurate associations that are used to generate inference model 112. A similar process occurs for extracted metadata in subset 114 and associated security labels to form inference model 118, 120. Likewise, a similar process occurs for extracted context factors dataset 122 and any associated security labels.

The inference models are weighted by model weighting 124 and the final model 126 is generated based on the weighting. When final model 126 is used to classify documents, the model will generate classifications based on the weight parameter associated with model 112 and models 118, 120. Generated classifications will also take into account any associations that are included in context factors data set 122. For example, if metadata inference model 118 is weighted more heavily than content inference model 112, then final model 126 will rely more heavily on the inference associations of model 118 when generating security labels for new documents.

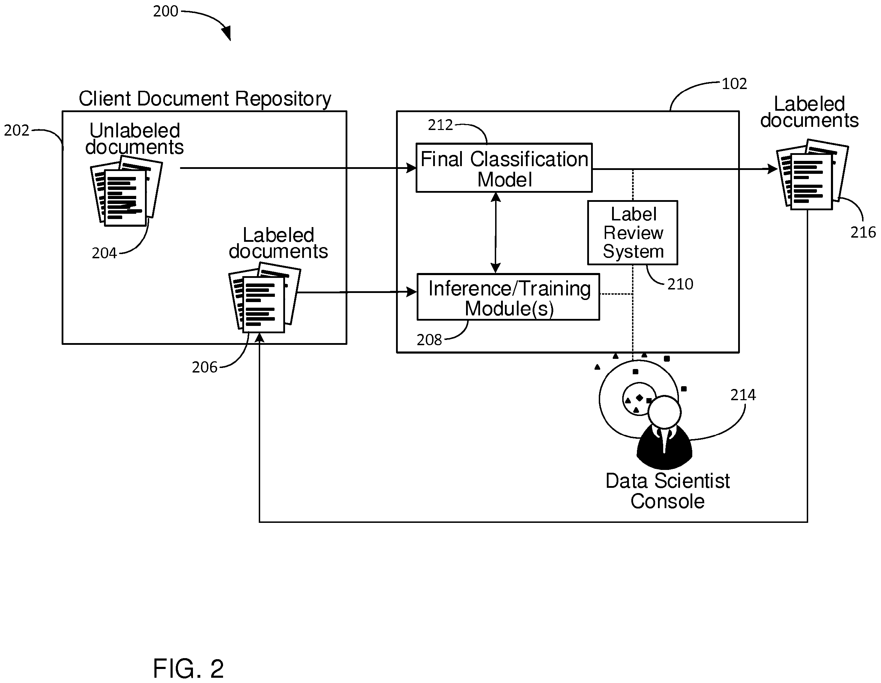

FIG. 2 illustrates a block diagram of an example computing system 200 for validation of one or more determined security classifications for electronic data items. In some implementations, system 200 can be a sub-system of system 100, and so data processing functions of system 200 can be implemented, at least in part, by computing device 102. In addition to computing device 102, system 200 includes an example client or customer managed document repository 202. Document repository 202 can be an example electronic data item storage medium such as a file management system or document file server. As shown, repository 202 can store multiple electronic documents that include unlabeled documents 204 and labeled documents 206.

In the implementation of FIG. 2, computing device 102 includes one or more inference or training modules 208, security label review system 210, and final classification model 212. Inference/training modules 208 can include functionality associated with the one or more modules described above in the implementation of FIG. 1. For example, inference/training modules 208 can include data processing and machine learning functions associated with content module 104, metadata module 106, context module 108, weighting module 124. Likewise, final classification model 212 can correspond to final model 126 generated by system 100 in the implementation of FIG. 1.

Data scientist console 214 can include one or more computing assets that enable at least one data validator to interface with label review system 210. As noted above, at least one data validator can be used to analyze and validate one or more classification inferences generated by content module 104 and metadata module 106. Likewise, the data validator can be used to analyze and validate database relations used by context module 108 to generate an example weight parameter.

When initially deployed in a client's computing environment, modules 208 of system 200 receive multiple labeled documents 206. Content, metadata and contextual factors associated with labeled documents 206 are scanned, extracted and stored within an example storage medium of module 208. Likewise, security labels associated with the documents 206 are also scanned, extracted, and stored.

One or more machine learning algorithms can be executed by modules 208 to generate inference models that include multiple classifications inferences. One or more weight parameters can be generated based, at least in part, on the inference models. In some implementations, finalized weight parameters can be used to generate an example final classification model. As indicated above, in some implementations, one or more accuracy metrics for each weight parameter can be determined or calculated by an example weighting module of inference/training modules 208.

For example, modules 208 can execute program code that analyzes one or more validation datasets that include subsets of generated classification inferences that correspond to a particular weight parameter. In some implementations, a subset of inferences in at least one validation dataset can include classification inferences based on content and related security labels extracted from documents 206, or based on metadata and related security labels extracted from documents 206.

Based on the analysis of the respective validation datasets (i.e., content and metadata), accuracy metrics can be calculated that quantify the accuracy of classification inferences and corresponding weight parameters for extracted content data. Likewise, accuracy metrics can be calculated that quantify the accuracy of classification inferences and corresponding weight parameters for extracted metadata.

In some implementations, validation and/or determination of accuracy metrics can be automated based on execution of one or more test scripts by review system 210. The executed test scripts can compare generated classification inferences to standardized or baseline classification inferences relating to test data sets that include known classifications for certain existing documents. Based on this comparison, the executed test scripts can calculate an accuracy metric for a particular validation dataset or test data set.

In some implementations, one or more accuracy metrics for each weight parameter can be determined or calculated, in part, based on manual input to system 200 from at least one data validator. For example, validation datasets that include classification inferences based on extracted content data can be analyzed by at least one data validator using console 214. The determined accuracy metric can be received by label review system 210 and provided to modules 208 for use in generating final model 212.

For example, validation of certain classification inferences that are based on extracted content data yields an accuracy metric of 50% or a 0.5 weighting parameter. Similarly, validation of certain classification inferences that are based on extracted metadata yields an accuracy metric of 30% or a 0.3 weighting parameter. Likewise, validation of certain classification associations contained in an example contextual factors dataset yields an accuracy metric of 20% or a 0.2 weighting parameter. Thus, system 200 can use accuracy metrics obtained from an example validation phase as final weighting parameters to generate a final classification model 212.

In some implementations, the data validator uses or applies scientific processes and systems to extract knowledge or insights from data in various forms, either structured or unstructured. In some implementations, the data validator can be a data scientist/human operator or a computer based system that can receive user input from a human operator.

While deployed in a client's computing environment, system 200 can operate in a training mode or validation mode such that security classifications of unlabeled documents 204 (which generate labeled documents 216) are analyzed to either improve classification determinations generated by final model 212 or validate functionality/accuracy of model 212. In some implementations, a client may have a large repository of legacy unlabeled documents 204 that require security classification. The legacy documents can be provided to system 200 and final model 212 can be used generate labeled documents 216.

In some implementations, system 200 can execute machine learning logic to train or tune predictive inferences of modules 208 based, in part, on labeled documents 206 and 216. Further, during a training process, labeled documents 206 can be received initially by inference/training modules 208 such that modules 208 are iteratively trained until generated classification inferences meet or exceed a threshold accuracy.

In some implementations, prior to generating a final model 212 that is launched in a client's computing environment, system 200 can generate an interim final model. The interim final model can receive a subset of unlabeled documents 204 and security classifications by the interim model be can analyzed by a data validator to validate functionality of a final model 212 that is launched in the client's environment.

In some implementations, system 200 can determine a security classification of at least one unlabeled document 204 using final classification model 212 to produce a labeled document 216. System 200 can then use a data validator to validate that the predicted/generated security classification is correct/accurate relative to particular content, metadata, or contextual factors associated with document 204. In some implementations, data console 214 can include a computing device and a display that are accessible by a user of console 214. System 200 can then provide the classified/labeled document 216 for display and review by the user.

In some implementations, multiple labeled documents 216 can be used by system 200 to train or retrain future models such that system 200 can generate or build new or evolving final models 212. Additional details and descriptions relating to computing systems and computer-implemented methods for generating new or updated final classification models are described in more detail below with reference to FIGS. 6-9.

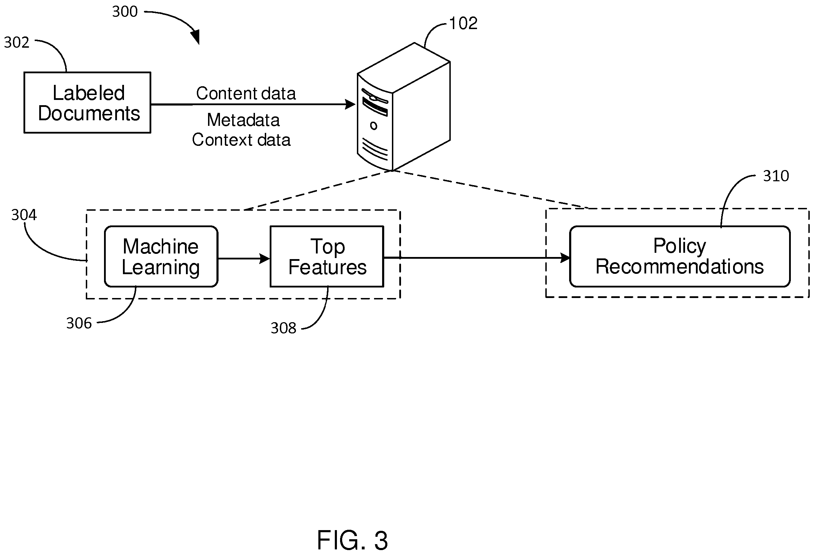

FIG. 3 illustrates a block diagram of an example computing system 300 for determining policy recommendations for generating security classifications for electronic data items. In some implementations, system 300 can be a sub-system of system 100, and so data processing functions of system 300 can be implemented, at least in part, by computing device 102. In addition to computing device 102, system 300 includes labeled documents 302 that are provided to computing device 102.

In the implementation of FIG. 3, computing device 102 executes an example inference module 304. Inference module 304 can be configured to scan, detect, extract or otherwise obtain content data, metadata, or contextual factors for respective labeled documents 302 provided to computing device 102. Module 304 can then execute embedded machine learning logic 306 to iteratively identify top features or attributes that are identified as important to determining a particular security classification. In some implementations, certain document attributes are identified or selected as top features based on how often a particular attribute is associated with a particular security classification.

Computing device 102 can use machine learning logic 306 to generate at least one dataset that includes one or more sets of final top features 308. In some implementations, an example storage medium of module 304 can be used to store the dataset of final top features 308. The dataset of final top features 308 can include respective feature sets that include top content data features that contribute to certain security classifications, top metadata features that contribute to certain security classifications, and top contextual factors/features that contribute to certain security classifications.

For example, content data top features can include word sequences from extracted content data that can include a single word or consecutive words that appear as text in a particular labeled document 302. Embedded machine learning logic, through iterative scans of multiple documents 302, can identify that the word "Whitehouse" is a top content data feature that contributes to a top secret security label of multiple documents 302. Likewise, the word sequence of "Congress Rumors" can also be identified as a second top content data feature that contributes to a top secret security label of multiple documents 302.

Computing device 102 can access or reference the stored list of final top features 308 to generate one or more policy recommendations 310. For example, computing device 102 can generate a policy recommendation 310 that suggests newly generated or unlabeled documents that include content data having repeat occurrences of the words "Whitehouse" or "Congress Rumors" have a high probability of warranting a top secret security classification.

In some implementations, system 300 can generate a system output that includes the dataset of final top features 308 and a summary of learned inferences derived from execution of machine learning logic 306. The summarized inferences and dataset of top features 308 can be used by client or customer's senior leadership as factors to be considered when defining/designing data protection policies or security classification policies. These inferences and top features can be used to set or suggest access privileges to be applied to certain documents so that access to (and control of) certain documents is appropriately restricted in accordance with security classification policies and corresponding security labels for the documents.

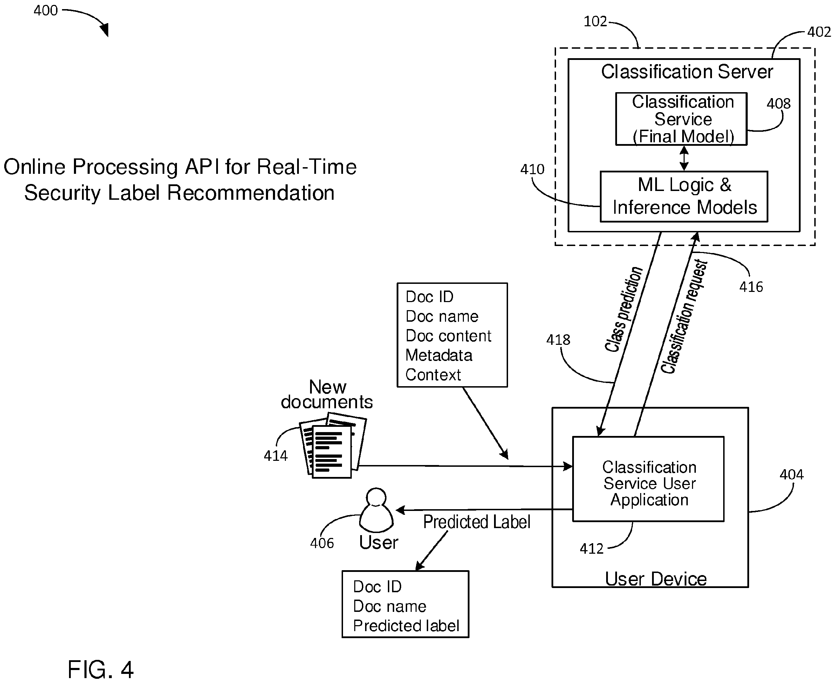

FIG. 4 illustrates a block diagram of an example computing system 400 for determining security classifications for electronic data items by way of an online processing interface. In some implementations, system 400 can be a sub-system of system 100, and so data processing functions of system 400 can be implemented, at least in part, by computing device 102. In addition to computing device 102, system 400 includes a classification server 402, a user device 404, and a user 406. User device 404 can be an example computing device such as a laptop/desktop computer, smartphone/mobile device, or a tablet device.

In the implementation of FIG. 4 computing system 400 can include an online service mode in which an end user 406 that requires access to classification services can interface with a cloud-based or server-based classification system. User 406 can use the online service to submit one or more requests to obtain security classifications/labels for newly created documents 414 or electronic data items. Hence, system 400 can be operated in a cloud computing environment to provide data processing and computing functions of system 100 to a client/end user 406 as an online service.

For example, a user 406 may require a security classification or label prediction for one or more documents 414. In some implementations, user 406 can send a classification request 416 that includes document 414 to classification server 402 through user application 412. Upon receipt of the classification request 416, server 402 can execute program code to scan, detect, extract or otherwise obtain multiple attributes/features associated with received document 414. Server 402 can then use the extracted attributes to return a predicted classification 418 to user 406.

Server 402 includes a classification service module 408 that references machine learning logic and inference models 410 to generate or predict security labels for documents 414. In some implementations, system 400 can execute one or more iterative training or data validation processes described above with reference to the implementation of FIG. 2. For example, system 400 can execute embedded machine learning logic 410 to iteratively learn, train or modify classification inference models 410 that execute in a back end server or cloud computing environment.

User application 412 can be an example application file that runs locally on user device 404. To access to online server 402, user 406 can launch application 412 to generate an application interface for use in submitting one or more classification requests 416. In some implementations, user application 412 can execute program code that extracts document attributes locally within the computing environment of user device 404. Thus, an example classification request 416 received by server 402 may only include extracted attributes. In response to receiving request 416, server 402 can generate a classification prediction 418 and provide the predicted security label, document ID, and document name to user 406 through an interface of application 412.

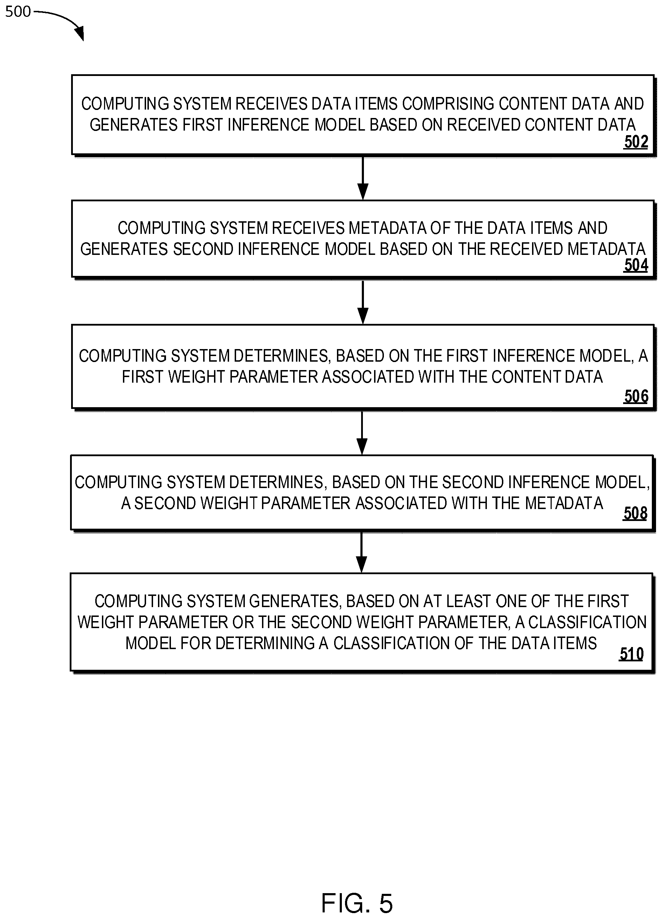

FIG. 5 illustrates a flowchart of an example process 500 for determining security classifications of one or more electronic data items. Process 500 begins at block 502 and includes computing system 100 receiving a multiple electronic data items 103 that include content data. In some implementations, the data items are electronic documents that include text content and digital image content. Content module 104 of computing system 100 then generates a first inference model based on the received content data. The first inference model can include one or more classification inferences that are generated based on application of one or more machine-learning computing processes.

At block 504 of process 500, computing system 100 receives metadata associated with respective data items of the multiple electronic data items 103. In some implementations, the metadata includes data item attributes such as the data item originator, the data item file type or file extension, or the data item title and creation date. Content module 106 of computing system 100 then generates a second inference model based on the received metadata associated with respective data items of the multiple data items 103. The second inference model can include one or more classification inferences that are generated based on application of one or more machine-learning computing processes.

At block 506 of process 500, computing system 100 determines a first weight parameter based on the first inference model. In some implementations, the first weight parameter is associated with content data and corresponds to an inference model generated by content module 104. The first weight parameter indicates the instant to which security classifications generated by final model 126 are weighted or influenced by classification inferences generated by content module 104.

At block 508 of process 500, computing system 100 determines a second weight parameter based on the second inference model. In some implementations, the second weight parameter is associated with metadata and corresponds to an inference model generated by metadata module 106. The second weight parameter indicates the instant to which security classifications generated by final model 126 are weighted or influenced by classification inferences generated by metadata module 106.

At block 510 of process 500, computing system 100 generates final classification model 126 for determining a security classification of at least one data item of the multiple received data items. In some implementations, generating the classification model can include computing system 100 using one or more machine-learning processes. For example, system 100 can cause model weighting module 124 to execute one or more machine learning algorithms that receive at least one weight parameter as an input that is used, in part, to generate final classification model 126. The final classification model is used to determine the security classification of at least one data item (e.g., an electronic document). A security classification can be at least one of a "sensitive" security classification, a "confidential" security classification, a "secret" security classification, or a "top secret" security classification.

In the invention, in addition to assigning a security label to a document, a security classification (label) of a document is used or analyzed by a computing module of the system to determine which users have access to the document. Additionally, the security classification that is applied to a document is used to determine whether a computing module of system 100 encrypts the document or not. For example, if a security label changes from "not sensitive" to "sensitive" (i.e., from a lower security classification level to a higher security classification level), the computing module can receive an indication of this change and trigger a determination to encrypt the document. Moreover, if a security label changes from "sensitive" to "top secret," the computing module can receive an indication of this change and make a decision to use a more secure/advanced level of encryption and, thus, re-encrypts the document using the more secure/advanced level encryption.

FIG. 6 illustrates a block diagram of an example computing system 600 for generating an updated classification model. System 600 includes a computing device 602 that can receive multiple electronic/digital data items 603 as well as data associated with the electronic items such as context data and metadata. Computing device 602 can include one or more different computing devices such as computing servers or a variety of different cloud-based computer systems. Further, computing device 602 can include multiple processing units, computer storage mediums, and/or computing modules configured to execute computer program code, machine readable instructions, or logic algorithms.

In some implementations, multiple documents 603 that have existing security classifications can be used by system 600 to initially train an example classification model that is deployed as a current model used to determine security classifications of documents. Hence, in response to the training, system 600 generates an initial current classification model for deployment in an example computer network.

Details and descriptions relating to computing systems and computer-implemented methods for generating initial/current classification models and validation of the models are described in related U.S. Patent Application No. 15/900,612, entitled "Security Classification by Machine Learning," filed on January 6, 2017, and Attorney Docket Number 12587-0617001. The entire disclosure of U.S. Patent Application No. 15/900,612 is expressly incorporated by reference herein in its entirety.

System 600 further includes a sub-system 605 that receives data from computing device 602. In some implementations, sub-system 605 can be a single module or a collection of modules and computational devices. The one or more modules and devices that form sub-system 605 interact to receive and process updated training data 604 and generate an impact estimate 606 based on the received training data 604.

Further, the one or more modules of sub-system 605 can execute model retraining 612 to retrain a current classification model 610 to generate an updated or new classification model 614 based on the impact estimate exceeding a threshold. New model 614 is eventually launched or deployed within an example computer network to become current model 610. Prior to the launch of new model 614 as the current model, model validation 616 is executed to validate accuracy of new model 614.

Updated training data 604 can include multiple data items 603 such as computer generated electronic/digital documents or files. Example electronic documents include Microsoft (MS) Word documents, MS PowerPoint documents, MS Excel documents, and/or PDF documents. Training data 604 can further include multiple data items corresponding to content change 618, metadata change 620, context change 622, and user feedback 624.

Content change 618, metadata change 620, and context change 622 collectively form modified data 617. Modified data 617 corresponds to changes made to baseline data used to generate an initial current classification model 610 deployed in an example computer network. For example, a first initial classification model can be generated based on an initial baseline aggregation of content data, metadata, and context factors. Modified data 617 is representative of changes to the baseline data which have the potential to impact, reduce, or degrade the accuracy of classifications generated by current model 610.

As used in this specification, modifications to baseline data items/documents that create or form modified data 617 can include, but are not limited to, document changes, document revisions, document additions, document deletions, or any other document alterations that causes a document to differ in any way from a baseline version of the document used to generate model 610. Further, modifications to baseline data items/documents also include changes, revisions, additions, deletions, or any other alterations that causes the document's content, metadata attributes, or context factors to differ in any way from a baseline version of the document.

Impact estimate 606 can be calculated or determined based on modified data 617 included within training data 604. Impact estimate 606 provides an estimated impact to the performance of the initial classification model based on the extent to which modified data 617 differs from the baseline aggregated data. An example primary impact to the performance of the initial model can be a reduction in the accuracy of security classifications/security labels generated for documents created and stored within the example computer network.

In some implementations, impact estimate 606 can generate an impact metric with a calculated metric value that quantifies a determined impact to current classification model 610. In some implementations, the impact metric indicates items of data structure 608 (i.e., impact scope, accuracy reduction, and cost). For example, the impact metric can indicate at least one of: an estimate of an impact scope; a probability of first/current model 610 determining an inaccurate security classification; or a cost estimate associated with retraining the first classification model to generate the second classification model.

In some implementations, and with reference to sub-system 605 of FIG. 6, the drawing features 604, 606, 608, 610, 612, 614, and 616 can each correspond to computational logic, program code, or computer program instructions that are executable by an example processor to cause system 600 to perform the described functions. In some implementations, these computational logic, program code, or computer program instructions are associated with one or more modules of device 602 and can be stored in an example non-transitory computer readable storage medium of device 602.

In some implementations, computing device 602 can include a single or multiple modules and system 600 can include one or more additional computing devices or related server devices. The modules of system 600 can be associated with computing device 602 and, for example, can be disposed within device 602. In alternative implementations, the modules of system 600 can include independent computing devices that are coupled to, and in data communication with, device 602. In some implementations, computing modules of device 602 are representative of machine learning, neural network inference computations, and/or data extraction and analysis functions that can be executed by device 602.

As used in this specification, the term "module" is intended to include, but is not limited to, one or more computers configured to execute one or more software programs that include program code that causes a processing device(s) or unit(s) of the computer to execute one or more functions. The term "computer" is intended to include any data processing device, such as a desktop computer, a laptop computer, a mainframe computer, a personal digital assistant, a server, a handheld device, or any other device able to process data.

Computing device 602 and any corresponding modules can each include processing units or devices that can include one or more processors (e.g., microprocessors or central processing units (CPUs)), graphics processing units (GPUs), application specific integrated circuits (ASICs), or a combination of different processors. In alternative embodiments, device 602 include other computing resources/devices (e.g., cloud-based servers) that provide additional processing options for performing one or more of the machine learning determinations and calculations described in this specification.

The processing units or devices can further include one or more memory units or memory banks. In some implementations, the processing units execute programmed instructions stored in memory to cause device 602 to perform one or more functions described in this specification. The memory units/banks can include one or more non-transitory machine-readable storage mediums. The non-transitory machine-readable storage medium can include solid-state memory, magnetic disk, and optical disk, a random access memory (RAM), a read-only memory (ROM), an erasable programmable read-only memory (e.g., EPROM, EEPROM, or Flash memory), or any other tangible medium capable of storing information.

As an example to illustrate the operation of system 600, program code including machine learning logic for current model 610 can be executing within device 602. In this example, device 602 is connected to an electronic document repository of an example computer network. The document repository can have several Word documents or PowerPoint files that relate to a variety of topics (intelligence, defense, mergers, divestitures, drone technology, etc.).

The several word documents and presentation files may not have existing security labels that indicate a classification of the documents/files. Hence, current model 610 executes within device 602 to classify the word documents and presentation files in the document repository. For example, a set of 10 documents classified by current model 610 can receive security labels such as "top secret," "sensitive," "export controlled," or "secret."

The word files and presentation files will include a variety of words or phrases, image/picture data, graphics data, or other related content that establish or indicate content data of the files. In some instances, documents may reside in electronic file folders with folder names that indicate the document is affiliated with the Finance, Accounting, or Military programs department. Information that a document is affiliated with (or owned by) a particular department or program/office can indicate an environment context of the document and the actual department or program can establish a context factor of the document.

Further, the Microsoft Word/PowerPoint files and other related documents can each include metadata that is detectable through a properties function of the file. Example metadata viewable when examining document properties can include document title, file name, authors, date created, date modified, content type, or folder path. These document property items can establish or identify metadata attributes of the document.

Current model 610 analyzes the document contents including words, phrases, and n-grams within the document to classify and generate accurate security labels for the documents. Model 610 can also analyze the metadata (e.g., author, date created) of the documents and the context factors (e.g., department affiliation) of the documents to classify and generate accurate security labels for the documents.

For example, model 610 can determine the classifications by referencing content data and metadata inference associations that are generated using machine learning logic. These inference associations can represent trained machine logic that over time associates certain words/phrases/n-grams (content data) to certain security labels. Likewise, the inference associations can also represent trained machine logic that over time associates certain titles/filenames/authors (metadata) to certain security labels.

When system 600 and current model 610 are launched within the example network, device 602 connects to the repository to scan each document/file and extract words or phrases from each word document or presentation file, extract metadata, extract context factors, and extract existing security labels.

In this example illustrating operation of system 600, the set of 10 classified documents discussed above may be modified over time. Device 602, connected to the repository, can periodically scan classified documents in the repository to detect modifications or changes to the documents. Modifications to the documents can include changes to content data (e.g., revisions adding new phrases), metadata (e.g., date modified or new authors), and context factors (e.g., new department affiliation/ownership).

These modifications can cause new associations to form, such as: between certain content data and certain security labels; between certain metadata and certain security labels, and between certain context factors and certain security labels. So, in view of these new associations, current model 610 may be generating security labels for new word documents and presentation files based on old or outdated inference associations. Hence, the accuracy of security labels generated by model 610 may degrade or reduce over time as the scope of modifications/changes to the document set increases.

Current model 610 may eventually require retraining to generate a new model 614 that uses more recent inference associations. Retraining can depend on the scope of the modifications/changes to the documents and how those changes effect the legitimacy of the initial inference associations were used to train model 610. Device 602 can estimate the impact of the modifications using an impact metric that estimates the scope of the modifications, the amount of accuracy reduction, and the cost to retrain the current model. The impact estimate can also estimate a business cost/impact such as profit loss when current model 610 inaccurately classifies certain documents. The impact estimate is compared to a threshold and current model 610 is retrained to generate new model 614 when the estimated impact metric exceeds the threshold.

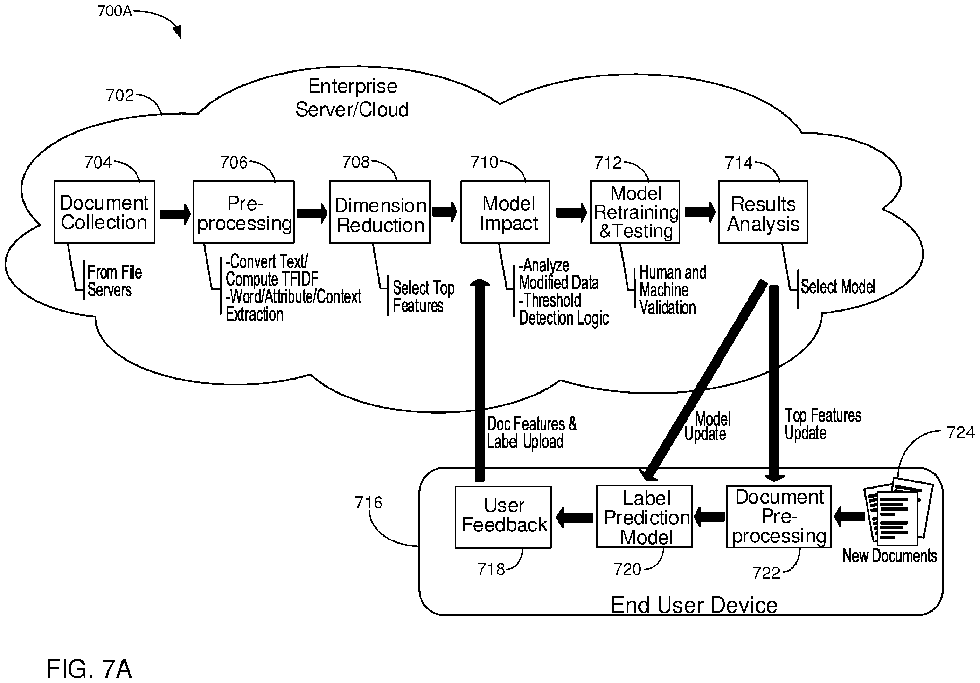

FIG. 7A illustrates a block diagram of a computing system 700A that includes multiple computational logic blocks (or modules) that interact to generate an updated/new classification, such as new model 614. System 700A includes enterprise server/cloud 702. In some implementations, system 700A is sub-system of computing device 602. For example, one or more modules of computing device 602 can cooperate and interact to form enterprise server/cloud 702.

In some implementations, server/cloud 702 of system 700A can be disposed locally within an example computer network of a client, a customer, a private entity, or public, defense, or intelligence entity. In alternative implementations, server/cloud 702 of system 700A can be disposed remotely in an external cloud computing environment and exchanges data communications with the example computer network via the internet.

In the implementation of FIG. 7A, the drawing features 704, 706, 708, 710, 712, and 714 can each correspond to computational logic, program code, or computer program instructions that are executable by an example processor to cause system 700A to perform the described functions. In some implementations, these computational logic features, program code features, or programmed instructions are associated with one or more modules of server/cloud 702 and can be stored in an example non-transitory computer readable storage medium of server/cloud 702.

Server 702 includes multiple logic features that can be used to iteratively generate updated security classification models. The classification models can be used by one or more users to classify and/or generate security labels for electronic data items created and stored within an example computer network. As used in this specification, while security classification and security label are synonymous, in some stances references to security classification can include an example classification operation performed by system 700A to generate a security label for a document. Example security labels can include Secret, Top Secret, Sensitive, Classified, Export Controlled, For Official Use Only or any other related security label.

As shown in FIG. 7A, server 702 includes document collection 704, pre-processing 706, dimension reduction 708, model impact 710, model testing 712, and results/analysis 714. As indicated above, each block or reference feature of server/cloud 702 corresponds to computational or programmed logic features that can be executed by a processor of server 702 to perform a corresponding described function.

System 700A further includes end user device 716. User device 716 can be an example end user device such as a desktop/laptop computer, a thin client device, a mobile computing device, a tablet or smartphone device, or any other related computing device. Device 716 includes user feedback 718, classification prediction model 720, and document pre-processing 722.

Similar to server 702, each block or reference feature of user device 716 corresponds to computational or programmed logic features that are executable by an example processor of user device 716 to perform a corresponding function. As described in more detail below, new documents 724 are provided to device 716 to receive a security classification or label.

The implementation of FIG. 7A can illustrate example operational states of system 700A. For example, system 700A includes one or more processes or features that operate or run in both a server/cloud environment as well as on an end user's computing device 716. The features or data blocks of server 702 cooperate and interact to produce/generate an example robust classification model that accurately predicts security classification labels for new documents 724.

Once generated, the classification model can be provided to user device 716 and stored in a storage-medium of device 716 for local operation on the device (i.e., as prediction model 720). Thus, when a user creates new documents 724, security label prediction model 720 will be available locally for the user to execute/launch and classify/generate security labels for new documents 724.

Regarding an example operation of server 702, document collection 704 includes server 702 receiving or collecting multiple documents 603 from an example document file server of the example computer network (e.g., an electronic document repository). At pre-processing 706, the multiple collected documents are scanned and processed such that relevant data can be detected/identified, and/or extracted.

In some implementations, example text conversion algorithms can be executed to extract one or more content data, metadata attributes or context factors. For example, a term frequency-inverse document frequency (TFIDF) algorithm can be executed by server 702 to determine how important a particular word is to documents in a collection or text corpus or respective documents. In some implementations, the TFIDF algorithm is used to detect or determine important words associated with a document's text content, a document's metadata attributes, and a document's contextual factors.

In an example operation executed by server 702, the TFIDF algorithm can be used to describe or determine how significant a particular word is for a generated security label. In some instances, server 702 can scan a first document and detect or identify a particular word that appears relatively often within the first document. The particular word, and the associated frequency with which the word appears in the first document, may be important for determining the security classification of the first document. However, in another instance, if that particular word appears less often in other documents, then that particular word may become less important relative to generating a global classification inference associated with that particular word.

Thus, multiple distinct word occurrences across multiple documents may be combined to generate an accurate classification model and/or to iteratively update a generated first classification model to produce subsequent classification models. For example, execution of the TFIDF algorithm can cause server 702 to: consider how often a particular word appears in a single document; consider how often a particular word appears in other documents relative to the single document; and generate an overall estimate of how important a particular word is based on the words relative occurrence within one or more relevant documents.

In some implementations, TFIDF can ultimately be a number which provides an estimate of how important a particular word or particular word sequence is for accurately determining a document's security classification. Example algorithms using TFIDF can include a Support Vector Machine (SVM) algorithm and a Center Based Similarity (CBS) algorithm. SVM algorithms can be generally described as a popular machine learning algorithm used as a benchmark in the data mining field.

In some implementations, the SVM algorithm can be configured to manage real world data such as data sets that are unbalanced. CBS algorithms provide a new/novel innovation in the field of document security classification, the present specification can implement unique software packages for use with the CBS algorithms to generate accurate security labels for classification of unbalanced data.

Referring again to the example operation executed by server 702, dimension reduction 708 includes selecting the top features from among the multiple relevant extracted text/words, metadata attributes or context factors identified during pre-processing 706. For example, server 702 can execute embedded machine learning logic to iteratively identify and select top features or attributes that are identified as important to determining a particular security classification.

In some implementations, server 702 generates a first set of top features that are used to generate an initial/first current classification model, such as current model 610 described above. For example, the first initial classification model can be generated based on an initial baseline aggregation of content data, metadata, and context factors. In some instances, the first set of top features can correspond to aggregated baseline content data, baseline metadata, and baseline context factors.

In some implementations, certain document attributes are identified or selected as top features based on how often a particular attribute is associated with a particular security classification. For example, selected top features can be based on respective feature sets that include top text/word features (i.e., content data) that contribute to certain security classifications, top metadata features that contribute to certain security classifications, and top contextual factors/features that contribute to certain security classifications.

For example, content data top features can include word sequences that include a single word or consecutive words that appear as text in a particular document. Embedded machine learning logic, through iterative scans of multiple documents 603, can identify that the word "Whitehouse" is a top content data feature that contributes to a top secret security label of multiple documents. Likewise, the word sequence of "Congress Rumors" can also be identified as a second top content data feature that contributes to a top secret security label of multiple documents.

Model impact 710 includes one or more logic constructs and algorithms used to generate an impact estimate based at least on analysis of modified data. The modified data can indicate one or more changes to baseline data used to generate the initial or current classification model. In some implementations, the impact estimate is based on an impact scope that indicates, for example, the extent to which a second set of top features generated by server 702 differs from the first set of top features generated by server 702.

In some implementations, the impact scope can correspond to at least one of: 1) an estimate of the extent to which the top features among modified content data (e.g., document text/words) differs from the top features among the baseline content data used to generate the first classification model; 2) an estimate of the extent to which the top features among modified metadata attributes (e.g., document title/owner) differs from the top features among baseline metadata attributes used to generate the first classification model; or 3) an estimate of the extent to which the top features among modified context data (e.g., business/department affiliation) differs from the top features among baseline context data used to generate the first classification model.

By way of example, server 702 includes functions and features, that enable a current classification model (e.g., current model 610) to be continually improved based on new information that is received by server 702. In some implementations, the new information sources are provided to server 702, in part, by user device 716 and based on the initial deployment of the current model. While in other implementations, new information sources can be received based on updates or content data changes, metadata changes, or context data changes associated with multiple documents of document collection 704.

In some implementations, server 702 processes and analyzes updates made to the multiple documents to generate an impact metric that corresponds to the impact estimate. Server 702 can then execute threshold detection logic to compare the generated impact metric to a threshold impact metric. Based on the comparison, server 702 can determine whether to update the current classification model (i.e., generate a new classification model) or continue executing the current model. Thus, when the calculated impact metric exceeds the threshold impact metric, server 702 can initiate model retraining & testing 712 and then proceed to results analysis 714.

In some implementations, the impact estimate can control or provide an indication as to when server 702 will trigger retraining of an example current classification model. Hence, the impact estimate provides a control mechanism that server 702 can use to efficiently determine an appropriate time to trigger retraining and generate a new/updated classification model.

The calculated impact estimate (or metric) enables server 702 to determine the impact that document changes or modified data will have on the integrity of the current model and/or the overall classification accuracy of system 700A.

For example, the computed inferences enable server 702 to dynamically learn and detect factors that substantially contribute to: 1) increased impact scope to the current model; 2) reductions in classification accuracy of the current model; 3) increased costs of inaccurate classifications generated by the current model; and 4) costs of retraining the current classification model to generate a new classification model.

Based on the multiple computed inferences, model impact 710 can generate an impact estimate used to measure or quantify, for example, the balance between the cost of acceptance of inaccurate classifications generated by the current model and the cost of retraining the current model. Hence, the generated impact metric can be used in a threshold comparison that considers costs of retraining the current model relative to costs of acceptance of inaccurate classifications of the current model. If the cost of retraining exceeds or outweighs the cost of accepting inaccurate classifications, then server 702 will not initiate model training 712.

For example, for some large data centers with multiple data repositories, financial costs associated with retraining a current model can be substantial and can also require large amounts of computational resources. In some instances, entities with large data centers may include file servers and cloud-based systems that are distributed across disparate geographic locations and that do not store particularly sensitive information.

For these entities, initiating retraining of a current model can require identification of data from disparate locations. Because retraining costs are high and the stored data is not particularly sensitive, the cost of inaccurate classification will be relatively low. Thus, for these entities, system 700A can be configured to include a retraining trigger that has a relatively high impact threshold. For example, to trigger retraining of the current model, the impact scope and probability of inaccurate classification must be substantially high so as to exceed the high impact threshold.

As indicated above, delays in executing model retraining 712 can adversely impact or reduce the accuracy of predicted security labels generated by the current model. In some implementations, as the impact metric value increases, there can be a corresponding (e.g., a proportional) reduction in security classification accuracy. For example, a particular impact metric value (e.g., overall impact 5 on a 10-point scale) can result in a current model that has a 95% security classification accuracy. Alternatively, an impact metric value of 7/10 can result in a current classification model that has an 85% classification accuracy.

In some instances, a 10% reduction in classification accuracy is tolerable for an entity in which security label accuracy is less of a priority. While, in other instances, for entities that routinely handle sensitive information, a 10% reduction in classification accuracy can negatively impact a business's profitability. In some implementations, server 702 can execute program code to compute a cost or quantitative amount that estimates business impact based on a particular reduction in classification accuracy. For example, the computation can indicate that each 2% drop in classification accuracy corresponds to a potential $10,000 impact/reduction in business profitability.

In some implementations, the impact estimate can use the quantitative profit loss indicator as a basis to determine an appropriate impact threshold for determining when to trigger retraining of the current classification model. For example, server 702 can execute logic associated with model impact 712 to compute the profit loss amount and to compute an estimated cost of retraining the current model.

In some implementations, impact threshold can correspond to a particular retraining cost amount (e.g., $600,000), while the impact metric can correspond to the profit loss indicator. Thus, when the estimated profit loss (e.g., $610,000) exceeds the cost of retraining (e.g., $600,000), server 702 can trigger model training & testing 712 as well as results analysis 714 to generate an updated classification model, such as new model 614 described above.

As noted above, model retraining & testing 712 as well as results analysis 714 are substantially related to the multiple processes associated with training an initial classification model and data validation of the generated initial model. Accordingly, details and descriptions relating to computing systems and computer-implemented methods for training/retraining current classification models and validation of the models are described in related U.S. Patent Application No. 15/900,612, entitled "Security Classification by Machine Learning," filed on January 6, 2017, and attorney docket number 12587-0617001.

As shown, in the implementation of FIG. 7A, user device 716 includes a label prediction model 720 that is executed locally by the device. Server 702 can execute results analysis 714 and concludes the results analysis by generating and selecting a new/updated model to be provided to user device 716 as a model update for prediction model 720. Hence, classification prediction model 720 is iteratively updated based on when server 702 triggers retraining of an example current model to generate a model update for prediction model 720. Document pre-processing 722 corresponds substantially to the described functions of pre-processing 706.

As noted above, processes executed by server 702 enables a current classification model to be continually improved based on new information received by the server. In some implementations, the new information sources are provided to server 702 by user device 716. An example source of new information can be user feedback 718 provided to server 702 from users of device 716.

For example, a user can execute a classification process locally within device 716 to generate a security label for one or more new documents 724. In some implementations, program code associated with prediction model 720 can include graphical user interface that receives feedback from the user. The received feedback can indicate whether a particular security label generated by model 720 for new documents 724 is believed, by the user, to be either correct or incorrect.

In some implementations, server 702 can presume that the user's feedback about the accuracy of the generated security labels is correct. Hence, when presumed correct, user feedback 718 as an example data point for determining when to trigger retraining of the current model and can improve overall accuracy of the prediction model 720. In some implementations, server 702 receives user feedback 718 (e.g., user data) that indicates an assessment of one or more data item/document classifications determined by a first classification model iteration of prediction model 720.

Server 702 can then generate an impact metric that is associated with an attribute of the first iteration of prediction model 720. The impact metric can be based on the received user feedback 718 and the attribute can relate to the accuracy of the security labels generated by prediction model 720 for new documents 724.

In some implementations, when user feedback 718 is not presumed correct, human data mining/classification experts (e.g., data scientists) can analyze aggregated datasets of user feedback 718. The human experts can also analyze security classifications generated by prediction model 720. The human experts can indicate the percentage of machine-learning based security labels generated by model 720 that are correct relative to the percentage that the received user feedback indicates is correct. In some instances, and based on the analysis, human experts can modify parameters of the machine-learning logic to improve the accuracy of prediction model 720.

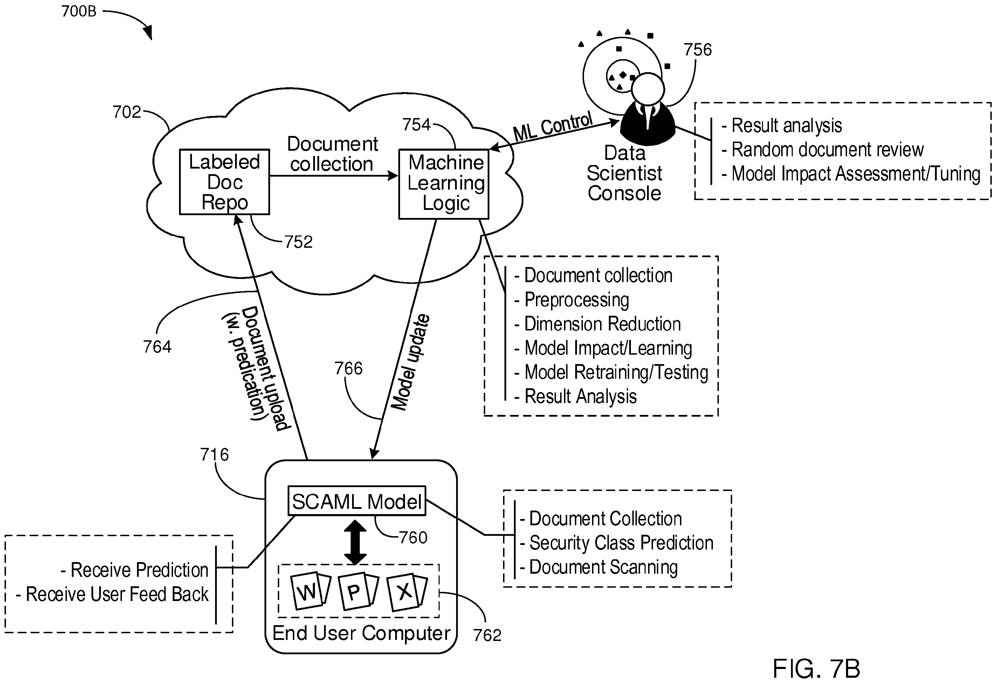

FIG. 7B illustrates a block diagram of a computing system 700B that includes multiple modules that interact to generate an updated classification model. In some implementations, system 700B is a sub-system of server 702 and can include one or more of the functions and features described above with reference to the implementation of FIG. 7A.

System 700B includes a document repository 752 having multiple documents that include existing security labels. Machine-learning logic 754 can receive modified data that includes text data, metadata attributes, and context factors associated with each document. In some implementations, machine-learning logic 754 can be executing within a local server or an external/non-local cloud-computing environment. Further, logic 754 can be configured to execute the one or more described functions associated with the multiple features of server 702.

For example, logic 754 can receive at least modified content data, metadata, and context data that includes changes to baseline content data, metadata, and context data used to generate a first iteration of model 760. Logic 754 can execute machine-learning computational processes to process received data, select top features, generate an impact metric, and initiate retraining of model 760 when the impact metric exceeds a threshold.

Model 760 can correspond to prediction model 720 and includes functionality relating to security classification by machine-learning (SCAML). Application files associated with model 760 can be stored locally within a storage-medium of device 716 and, thus, executed from end user device 716. Model updates 766 can be received from a non-local (relative to user device 716) machine-learning component that executes logic 754. In some implementations, model updates 766 are implemented by way of a conventional updating/patching protocol.

In an example operation, when a user creates a new document using device 716, model 760 is used to predict a document security label (e.g., secret, top secret, sensitive, classified, export controlled). User device 716 can cause the recommended security label to be displayed in an example application program such as MS Outlook or a related MS Office application program. Model 760 can be configured to collect user feedbacks that pertain to the accuracy of the prediction results. Classified documents and received user feedback are provided to server 702 via data communication path 764 and can be used by logic 754 to further train/retrain model 760.

In some implementations, model 760 provides a security label management solution for implementation as a plug-in application file that can launched from example MS Office applications 762 such as MS Word, MS PowerPoint, or MS Excel. For example, execution of the plug-in within new documents or email correspondences that incorporate model 760 can generate a security field that prompts the user to initiate a scan of the completed document. In response to completing the scan, model 760 can generate a security label and upload the labeled document to repository 752 for feature extraction and analysis by machine-learning logic 754.

Data scientist console 756 can include one or more computing assets that enable at least one data scientist/validator to conduct analysis of classified documents. The analysis can include the data scientist interacting with machine-learning logic 754 to validate or correct security label results/predictions generated by model 760. The data scientist can also conduct random reviews of classified documents, conduct model impact assessments and analysis, and tune or modify parameters associated with logic 754, such as, parameters used to generate impact estimates.

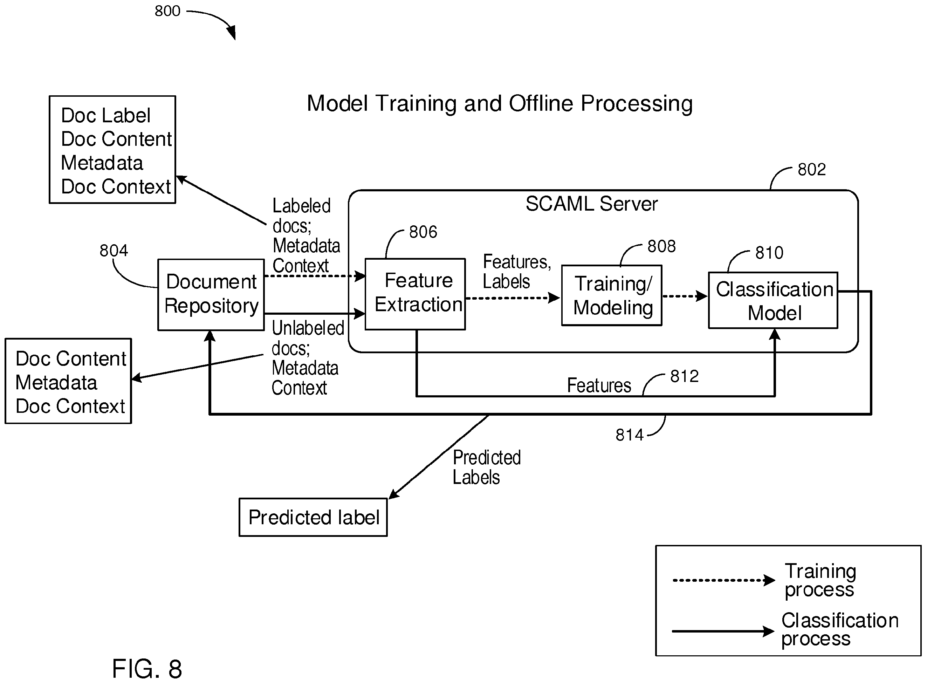

FIG. 8 illustrates a block diagram of an example computing system 800 that includes model training logic used to generate an updated classification model. In some implementations, system 800 is a sub-system of server 702 and can include one or more of the functions and features described above with reference to the implementation of FIGs. 7A and 7B.

System 800 includes a SCAML server 802 having a document repository 804 that stores multiple documents that include existing security labels as well as multiple unlabeled documents that require security labels. In some implementations, system 800 can operate in an offline mode or batch processing mode with minimal user input. While in these modes system 800 can scan and analyze large quantities of content data, metadata attributes, and context factors associated with documents stored in repository 804.

Scanned and analyzed data for labeled documents in repository 804 can be used by training/modeling logic 808 to train system 800 so as to generate a first iteration of classification model 810. In some implementations, system 800 generates the first iteration of model 810 by, in part, using machine-learning logic associated with training/modeling 808 to train the first model iteration to determine security classifications of unlabeled documents within repository 804.

Labeled documents within repository 804 are scanned and relevant features are extracted by feature extraction logic 806. In some implementations, the extracted features correspond to modified data 617 described above in the implementation of FIG. 6. While in other implementations, the extracted features correspond to baseline or modified top features described above in the implementation of FIG. 7A. Training/modeling 808 processes the one or more extracted features that are provided by feature extraction logic 806 and can tune the first model iteration using, for example, the baseline extracted top features.

In some implementations, while the first iteration of classification model 810 is executing to classify unlabeled documents, server 702 can execute program code to periodically scan, analyze, and extract data or features associated with labeled documents. The extracted data or features can correspond to document changes or modifications that have occurred over time. In some implementations, document changes or modifications to labeled documents can form a training dataset that is referenced by logic 808 when generating one or more iterations of classification model 810.

Training/modeling logic 808 can include at least one algorithm that generates an impact estimate based on the extent to which modified data/top features differs from baseline data/top features. Logic 808 can generate a second iteration of classification model 810 in response to the impact estimate exceeding a threshold. In some implementations, generating the second iteration of model 810 includes using machine learning logic to retrain the first model 810 to determine security classifications when modified data differs substantially from baseline data. Thus, the first classification model is retrained based on the difference between at least one of: baseline content data and modified content data; baseline metadata and modified metadata, or baseline context data and modified context data.

In example operations, the first iteration of model 810 can be used in the offline batch processing mode to generate security labels/classifications for multiple unlabeled documents. While in the offline batch processing mode, server 702 executes feature extraction logic 806 to scan, analyze, and extract one or more features from the unlabeled documents. The extracted features are provided as inputs to the first iteration of model 810 along data path 812. In some implementations, server 702 executes machine-learning logic to generate security labels for the unlabeled documents. The classified documents including the predicted labels are provided back to document repository 804 along data path 814.

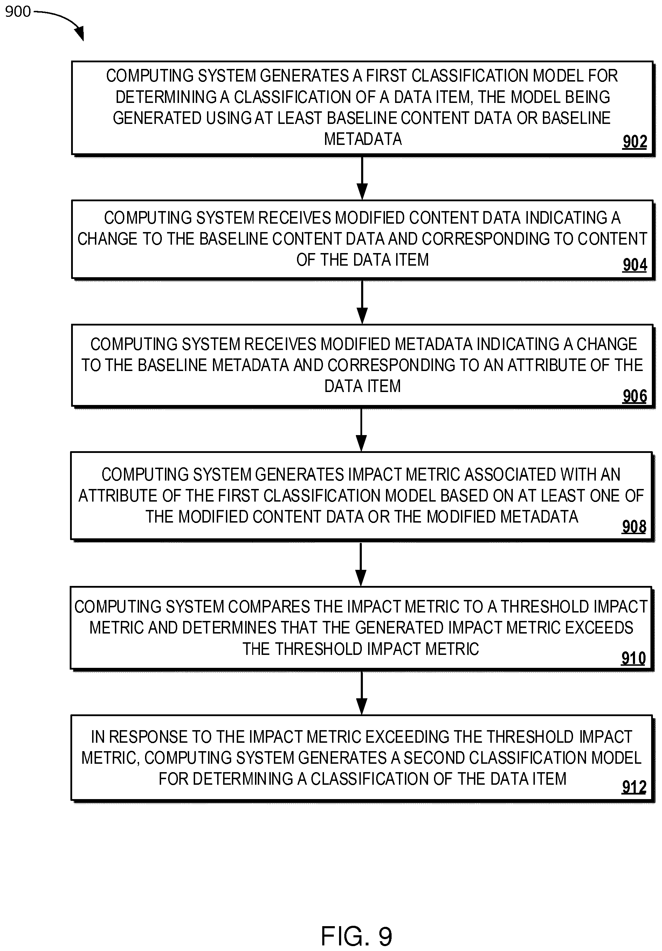

FIG. 9 illustrates a flowchart of an example process 900 for generating an updated classification model. Process 900 begins at block 902 and includes computing system 600 generating a first classification model for determining a classification of a data item. In some implementations, the data item is an electronic document or file and the first classification model is generated using at least one of baseline content data or baseline metadata. The baseline content data can correspond to text or words scanned and extracted from multiple electronic/digital electronic documents 603; and the baseline metadata can correspond to attributes (e.g., document author, department originating document) extracted from the document.

At block 904, process 900 includes computing system 600, receiving modified content data indicating a change to the baseline content data used to generate the first classification model. The modified content data can correspond to changes in text content of the data item such as changes words, phrases, or n-grams. The modified content data can indicate text or content changes to a document grouping used to create the first classification model. In some implementations, text and content changes have the potential to adversely impact or reduce the accuracy of security classifications generated by the first classification model.

At block 906, process 900 includes system 600 receiving modified metadata indicating a change to the baseline metadata used to generate the first classification model. The modified metadata can correspond to changes to one or more attributes of the data item such as changes in document ownership or department affiliation. The modified metadata can indicate attribute changes to a document grouping used to create the first classification model. In some implementations, metadata or attribute changes have the potential to adversely impact or reduce the accuracy of security classifications generated by the first classification model.

At block 908, process 900 includes system 600 generating an impact metric associated with an attribute of the first classification model. The impact metric can be generated based on at least one of the modified content data or the modified metadata. In some implementations, the attribute of the first classification model includes an impact scope that adversely affects the first classification model, an estimated accuracy reduction in the first model, and an estimated cost to mitigate impact to the first model.

In some implementations, the extent of change between baseline content data and modified content data can be linked in a linear relationship to an overall impact metric value. For example, the greater the extent of change or modification between the baseline content and the modified content the greater the effect on the overall impact metric value. Likewise, the extent of change between baseline metadata and modified metadata can be also linked in a linear relationship to the overall impact metric value. For example, the greater the extent of change or modification between the baseline metadata and the modified metadata the greater the effect on the overall impact metric value.

At block 910, computing system 600 compares the generated impact metric to a threshold impact metric and determines whether the generated impact metric exceeds the threshold impact metric. The threshold impact metric corresponds to a system threshold that, when exceeded, triggers retraining of the first classification model. In some implementations, the threshold impact metric is dynamically adjustable and can vary based on user preference.

At block 912 of process 900, computing system 600 generates a second classification model for determining a classification of the data item. The second classification model is generated in response to the generated impact metric exceeding the threshold impact metric. In some implementations, generating the second classification model corresponds to retraining the first classification model to produce an updated classification model (i.e., the second classification model).

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory program carrier for execution by, or to control the operation of, data processing apparatus.

Alternatively, or in addition, the program instructions can be encoded on an artificially generated propagated signal, e.g., a machine-generated electrical, optical, or electromagnetic signal, which is generated to encode information for transmission to suitable receiver apparatus for execution by a data processing apparatus. The computer storage medium can be a machine-readable storage device, a machine-readable storage substrate, a random or serial access memory device, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system.

A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array), an ASIC (application specific integrated circuit), or a GPU (General purpose graphics processing unit).

Computers suitable for the execution of a computer program include, by way of example, can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of any invention or of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In certain implementations, multitasking and parallel processing may be advantageous.

## Claims

1. A computer-implemented method for establishing and/or adjusting user access privileges to electronic data items, the method comprising:
receiving, by a computing system (200; 400), a plurality of electronic data items (206) wherein the plurality of electronic data items includes an electronic document having a document security classification and comprising text based content data and a plurality of attributes;
scanning, by the computing system, the electronic document to identify text based content data associated with a particular document security classification;
generating, by the computing system, a first inference model (112) based on the identified text based content data;
receiving, by the computing system, metadata (114; 116) associated with respective electronic data items of the plurality of electronic data items;
scanning, by the computing system, the electronic document for metadata corresponding to a particular attribute associated with the particular document security classification;
generating, by the computing system, a second inference model (118; 120) based on (i) the received metadata data associated with the respective electronic data items, and (ii) the particular attribute;
determining, by the computing system and based on the first inference model, a first weight parameter associated with the content data and based on a first accuracy metric associated with the first inference model;
determining, by the computing system and based on the second inference model, a second weight parameter associated with the metadata and based on a second accuracy metric associated with the second inference model;
generating, by the computing system and based on a particular combination of the weight parameters a classification model (126) for determining a security classification of at least one further electronic data item;
using the classification model to determine a security classification of at least one further electronic data item;
establishing and/or adjusting at least one user access privilege to the at least one further electronic data item based on the security classification; and
encrypting the at least one further electronic data item based on the security classification.

2. The method of claim 1, further comprising:
receiving, by the computing system, context data (122) for generating one or more contextual factors associated with the respective electronic data items of the plurality of electronic data items;
determining, by the computing system, a third weight parameter based on at least one contextual factor of the one or more contextual factors associated with the respective electronic data items; and
wherein generating the classification model for determining the security classification of the at least one further electronic data item is further based on the third weight parameter.

3. The method of claim 2, wherein generating the classification model comprises:
using, by the computing system, one or more machine-learning processes to generate the classification model for determining the security classification of the at least one further electronic data item, wherein at least one of the first weight parameter or the second weight parameter is used by at least one machine-learning algorithm to generate the classification model.

4. The method of any preceding claim, further comprising:
using, by the computing system, the first inference model to infer a first probability factor that the identified text based content indicates a particular document security classification, the first probability factor corresponding to the first weight parameter.

5. The method of any preceding claim, further comprising:
using, by the computing system, the second inference model to infer a second probability factor that the particular attribute indicates a particular document security classification, the second probability factor corresponding to the second weight parameter.

6. The method of any of the preceding claims, further comprising:
determining, by the computing system, the security classification of the at least one further electronic data item using the classification model;
receiving validation, from a data validator, that the security classification of the at least one further electronic data item determined using the classification model is a correct security classification relative to particular content of the at least one further electronic data item; and
providing, by the computing the system, the classified electronic data item for display on a computing device accessible by a user.

7. The method of any of the preceding claims, further comprising:
determining, by the computing system, the security classification of the at least one further electronic data item using the classification model, the security classification including at least one of a sensitive security classification, a confidential security classification, a secret security classification, or a top secret security classification.

8. The method of any of the preceding claims, wherein the first and second accuracy metrics are determined, based at least in part, on manual input provided by at least one data validator.

9. Computer program instructions that, when executed by one or more processing devices, cause the one or more processing devices to perform the method of one or more of the preceding claims.

10. An electronic system (200; 400) for establishing and/or adjusting user access privileges to electronic data items, the electronic system comprising:
one or more processing devices;
one or more machine-readable storage devices storing instructions that are executable by the one or more processing devices to perform operations comprising:
receiving, by a computing system (200; 400), a plurality of electronic data items (206), wherein the plurality of electronic data items includes an electronic document having a document security classification and comprising text based content data and a plurality of attributes:
scanning, by the computing system, the electronic document to identify text based content data associated with a particular document security classification;
generating, by the computing system, a first inference model (112) based on the identified text based content data;
receiving, by the computing system, metadata (114; 116) associated with respective electronic data items of the plurality of electronic data items;
scanning, by the computing system, the electronic document for metadata corresponding to a particular attribute associated with the particular document security classification;
generating, by the computing system, a second inference model (118; 120) based on (i) the received metadata data associated with the respective electronic data items, and (ii) the particular attribute;
determining, by the computing system and based on the first inference model, a first weight parameter associated with the content data and based on a first accuracy metric associated with the first inference model;
determining, by the computing system and based on the second inference model, a second weight parameter associated with the metadata and based on a second accuracy metric associated with the second inference model;
generating, by the computing system and based on a particular combination of the weight parameters, a classification model (126) for determining a security classification of at least one further electronic data item;
using the classification model to determine a security classification of at least one further electronic data item;
establishing and/or adjusting at least one user access privilege to the at least one further electronic data item based on the security classification; and
encrypting the at least one further electronic data item based on the security classification.

11. The electronic system of claim 10, wherein the instructions are executable by the one or more processing devices to perform the operations of one or more of claims 2 to 8.

## Patentansprüche

1. Computerimplementiertes Verfahren zum Herstellen und/oder Einstellen von Nutzerzugangsprivilegien zu elektronischen Datenelementen, wobei das Verfahren umfasst:
Empfangen durch ein Rechensystem (200, 400) von mehreren elektronischen Datenelementen (206),
wobei die mehreren elektronischen Datenelemente ein elektronisches Dokument enthalten mit einer Dokumentensicherheitseinstufung und umfassend textbasierte Inhaltsdaten und mehrere Attribute;
Scannen durch das Rechensystem des elektronischen Dokuments zum Identifizieren von textbasierten Inhaltsdaten, die mit einer bestimmten Dokumentensicherheitseinstufung assoziiert sind;
Generieren durch das Rechensystem eines ersten Schlussfolgerungsmodells (112) auf Basis der identifizierten textbasierten Inhaltsdaten;
Empfangen durch das Rechensystem von Metadaten (114, 116), die mit jeweiligen elektronischen Datenelementen der mehreren elektronischen Datenelemente assoziiert sind;
Durchsuchen durch das Rechensystem des elektronischen Dokuments nach Metadaten entsprechend einem entsprechenden Attribut, das mit der jeweiligen Dokumentensicherheitseinstufung assoziiert ist;
Generieren durch das Rechensystem eines zweiten Schlussfolgerungsmodells (118, 120) auf Basis von (i) den empfangenen Metadaten, die mit den jeweiligen elektronischen Datenelementen assoziiert sind, und (ii) des bestimmten Attributs;
Bestimmen durch das Rechensystem und auf Basis des ersten Schlussfolgerungsmodells eines ersten Gewichtsparameters, der mit den Inhaltsdaten assoziiert ist, und auf Basis einer ersten Genauigkeitsmetrik, die mit dem ersten Schlussfolgerungsmodell assoziiert ist;
Bestimmen durch das Rechensystem und auf Basis des zweiten Schlussfolgerungsmodells eines zweiten Gewichtsparameters, der mit den Metadaten assoziiert ist, und auf Basis einer zweiten Genauigkeitsmetrik, die mit dem zweiten Schlussfolgerungsmodell assoziiert ist;
Generieren durch das Rechensystem und auf Basis einer bestimmten Kombination der Gewichtsparameter eines Einstufungsmodells (126) zum Bestimmen einer Sicherheitseinstufung von mindestens einem weiteren elektronischen Datenelement;
Verwenden des Einstufungsmodells zum Bestimmen einer Sicherheitseinstufung von mindestens einem weiteren elektronischen Datenelement;
Herstellen und/oder Einstellen mindestens eines Nutzerzugangsprivilegs zu dem mindestens einen weiteren elektronischen Datenelement auf Basis der Sicherheitseinstufung; und
Verschlüsseln des mindestens einen weiteren elektronischen Datenelements auf Basis der Sicherheitseinstufung.

2. Verfahren nach Anspruch 1, weiter umfassend:
Empfangen durch das Rechensystem von Kontextdaten (122) zum Generieren von einem oder mehreren Kontextfaktoren, die mit den jeweiligen elektronischen Datenelementen der mehreren elektronischen Datenelemente assoziiert sind;
Bestimmen durch das Rechensystem eines dritten Gewichtsparameters auf der Basis von mindestens einem Kontextfaktor des einen oder der mehreren Kontextfaktoren, die mit den jeweiligen elektronischen Datenelementen assoziiert sind; und
wobei das Generieren des Einstufungsmodells zum Bestimmen der Sicherheitseinstufung des mindestens einen weiteren elektronischen Datenelements weiter auf dem dritten Gewichtsparameter basiert.

3. Verfahren nach Anspruch 2, wobei das Generieren des Einstufungsmodells umfasst:
Verwenden durch das Rechensystem von einem oder mehreren Maschinenlernprozessen zum Generieren des Einstufungsmodells zum Bestimmen der Sicherheitseinstufung des mindestens einen weiteren elektronischen Datenelements, wobei mindestens einer des ersten Gewichtsparameters oder des zweiten Gewichtsparameters durch mindestens einen Maschinenlernalgorithmus zum Generieren des Einstufungsmodells verwendet wird.

4. Verfahren nach einem vorhergehenden Anspruch, weiter umfassend:
Verwenden durch das Rechensystem des ersten Schlussfolgerungsmodells zum Schließen auf einen ersten Wahrscheinlichkeitsfaktor, dass der identifizierte textbasierte Inhalt eine bestimmte Dokumentensicherheitseinstufung anzeigt, wobei der erste Wahrscheinlichkeitsfaktor dem ersten Gewichtsparameter entspricht.

5. Verfahren nach einem vorhergehenden Anspruch, weiter umfassend:
Verwenden durch das Rechensystem des zweiten Schlussfolgerungsmodells zum Schließen auf einen zweiten Wahrscheinlichkeitsfaktor, dass das bestimmte Attribut eine bestimmte Dokumentensicherheitseinstufung anzeigt, wobei der zweite Wahrscheinlichkeitsfaktor dem zweiten Gewichtsparameter entspricht.

6. Verfahren nach einem der vorhergehenden Ansprüche, weiter umfassend:
Bestimmen durch das Rechensystem der Sicherheitseinstufung des mindestens einen weiteren elektronischen Datenelements unter Verwendung des Einstufungsmodells;
Empfangen einer Validierung von einem Datenvalidierer, dass die Sicherheitseinstufung des mindestens einen weiteren elektronischen Datenelements, unter Verwendung des Einstufungsmodells bestimmt, eine korrekte Sicherheitseinstufung ist bezüglich eines bestimmten Inhalts des mindestens einen weiteren elektronischen Datenelements; und
Bereitstellen durch das Rechensystem des eingestuften elektronischen Datenelements zur Anzeige auf einer Recheneinrichtung, die durch einen Nutzer zugänglich ist.

7. Verfahren nach einem der vorhergehenden Ansprüche, weiter umfassend:
Bestimmen durch das Rechensystem der Sicherheitseinstufung des mindestens einen weiteren elektronischen Datenelements unter Verwendung des Einstufungsmodells, wobei die Sicherheitseinstufung mindestens eine einer sensitiven Sicherheitseinstufung, einer vertraulichen Sicherheitseinstufung, einer geheimen Sicherheitseinstufung oder einer hochgeheimen Sicherheitseinstufung ist.

8. Verfahren nach einem der vorhergehenden Ansprüche, wobei die erste und zweite Genauigkeitsmetrik mindestens teilweise auf Basis einer manuellen Eingabe bestimmt werden, die durch mindestens einen Datenvalidierer bereitgestellt wird.

9. Computerprogrammanweisungen, die bei Ausführung durch eine oder mehrere Verarbeitungseinrichtungen bewirken, dass die eine oder die mehreren Verarbeitungseinrichtungen das Verfahren nach einem oder mehreren der vorhergehenden Ansprüche ausführen.

10. Elektroniksystem (200, 400) zum Herstellen und/ oder Einstellen von Nutzerzugangsprivilegien zu elektronischen Datenelementen, wobei das Elektroniksystem umfasst:
eine oder mehrere Verarbeitungseinrichtungen;
eine oder mehrere maschinenlesbare Ablageeinrichtungen, die Anweisungen speichern, die durch die eine oder die mehreren Verarbeitungseinrichtungen ausgeführt werden können, um Operationen durchzuführen, umfassend:
Empfangen durch ein Rechensystem (200, 400) von mehreren elektronischen Datenelementen (206),
wobei die mehreren elektronischen Datenelemente ein elektronisches Dokument enthalten mit einer Dokumentensicherheitseinstufung und textbasierte Inhaltsdaten und mehrere Attribute umfassend,
Scannen durch das Rechensystem des elektronischen Dokuments zum Identifizieren von textbasierten Inhaltsdaten, die mit einer bestimmten Dokumentensicherheitseinstufung assoziiert sind;
Generieren durch das Rechensystem eines ersten Schlussfolgerungsmodells (112) auf Basis der identifizierten textbasierten Inhaltsdaten;
Empfangen durch das Rechensystem von Metadaten (114, 116), die mit jeweiligen elektronischen Datenelementen der mehreren elektronischen Datenelemente assoziiert sind;
Durchsuchen des Rechensystems des elektronischen Dokuments nach Metadaten entsprechend einem entsprechenden Attribut, das mit der jeweiligen Dokumentensicherheitseinstufung assoziiert ist;
Generieren durch das Rechensystem eines zweiten Schlussfolgerungsmodells (118, 120) auf Basis von (i) den empfangenen Metadaten, die mit den jeweiligen elektronischen Datenelementen assoziiert sind, und (ii) des bestimmten Attributs;
Bestimmen durch das Rechensystem und auf Basis des ersten Schlussfolgerungsmodells eines ersten Gewichtsparameters, der mit den Inhaltsdaten assoziiert ist, und auf Basis einer ersten Genauigkeitsmetrik, die mit dem ersten Schlussfolgerungsmodell assoziiert ist;
Bestimmen durch das Rechensystem und auf Basis des zweiten Schlussfolgerungsmodells eines zweiten Gewichtsparameters, der mit den Metadaten assoziiert ist, und auf Basis einer zweiten Genauigkeitsmetrik, die mit dem zweiten Schlussfolgerungsmodell assoziiert ist;
Generieren durch das Rechensystem und auf Basis einer bestimmten Kombination der Gewichtsparameter eines Einstufungsmodells (126) zum Bestimmen einer Sicherheitseinstufung von mindestens einem weiteren elektronischen Datenelement;
Verwenden des Einstufungsmodells zum Bestimmen einer Sicherheitseinstufung von mindestens einem weiteren elektronischen Datenelement;
Herstellen und/oder Einstellen mindestens eines Nutzerzugangsprivilegs zu dem mindestens einen weiteren elektronischen Datenelement auf Basis der Sicherheitseinstufung; und
Verschlüsseln des mindestens einen weiteren elektronischen Datenelements auf Basis der Sicherheitseinstufung.

11. Elektroniksystem nach Anspruch 10, wobei die Anweisungen durch die eine oder die mehreren Verarbeitungseinrichtungen ausgeführt werden, um die Operationen von einem oder mehreren der Ansprüche 2 bis 8 durchzuführen.

## Revendications

1. Procédé mis en œuvre par ordinateur pour établir et/ou ajuster des privilèges d'accès d'utilisateurs à des éléments de données électroniques, le procédé comprenant :
la réception, par un système informatique (200 ; 400), d'une pluralité d'éléments de données électroniques (206), dans lequel la pluralité d'éléments de données électroniques comprend un document électronique pourvu d'une classification de sécurité de document et comprenant des données de contenu textuel et une pluralité d'attributs ;
la numérisation, par le système informatique, du document électronique pour identifier des données de contenu textuel associées à une classification de sécurité de document particulière ;
la génération, par le système informatique, d'un premier modèle d'inférence (112) en fonction (i) des données de contenu textuel identifiées ;
la réception, par le système informatique, de métadonnées (114 ; 116) associées à des éléments de données électroniques respectifs de la pluralité d'éléments de données électroniques ;
la numérisation, par le système informatique, du document électronique à la recherche de métadonnées correspondant à un attribut particulier associé à la classification de sécurité de document particulière ;
la génération, par le système informatique, d'un second modèle d'inférence (118 ; 120) en fonction (i) des données de métadonnées reçues associées aux éléments de données électroniques respectifs, et (ii) de l'attribut particulier ;
la détermination, par le système informatique et en fonction du premier modèle d'inférence, d'un premier paramètre de poids associé aux données de contenu et basé sur une première métrique de précision associée au premier modèle d'inférence ;
la détermination, par le système informatique et en fonction du second modèle d'inférence, d'un deuxième paramètre de poids associé aux métadonnées et basé sur une seconde métrique de précision associée au second modèle d'inférence ;
la génération, par le système informatique et en fonction d'une combinaison particulière de paramètres de poids, d'un modèle de classification (126) permettant de déterminer une classification de sécurité d'au moins un élément de données électroniques supplémentaire,
l'utilisation du modèle de classification pour déterminer une classification de sécurité d'au moins un élément de données électroniques supplémentaire ;
l'établissement et/ou l'ajustement d'au moins un privilège d'accès d'utilisateur à l'au moins un élément de données électroniques supplémentaire en fonction de la classification de sécurité ; et
le cryptage de l'au moins un élément de données électroniques supplémentaire en fonction de la classification de sécurité.

2. Procédé selon la revendication 1, comprenant en outre :
la réception, par le système informatique, de données de contexte (122) pour générer un ou plusieurs facteurs contextuels associés aux éléments de données électroniques respectifs de la pluralité d'éléments de données électroniques ;
la détermination, par le système informatique, d'un troisième paramètre de poids en fonction d'au moins un facteur contextuel des un ou plusieurs facteurs contextuels associés aux éléments de données électroniques respectifs ; et
dans lequel la génération du modèle de classification pour déterminer la classification de sécurité d'au moins un élément de données électroniques supplémentaire est basée en outre sur le troisième paramètre de poids.

3. Procédé selon la revendication 2, dans lequel la génération du modèle de classification comprend :
l'utilisation, par le système informatique, d'un ou plusieurs processus d'apprentissage automatique afin de générer le modèle de classification pour déterminer la classification de sécurité de l'au moins un élément de données électroniques supplémentaire, dans lequel au moins l'un du premier paramètre de poids ou du deuxième paramètre de poids est utilisé par au moins un algorithme d'apprentissage automatique pour générer le modèle de classification.

4. Procédé selon l'une quelconque des revendications précédentes, comprenant en outre :
l'utilisation, par le système informatique, du premier modèle d'inférence pour déduire un premier facteur de probabilité que le contenu textuel identifié indique une classification de sécurité de document particulière, le premier facteur de probabilité correspondant au premier paramètre de poids.

5. Procédé selon l'une quelconque des revendications précédentes, comprenant en outre :
l'utilisation, par le système informatique, du second modèle d'inférence pour déduire un second facteur de probabilité que l'attribut particulier indique une classification de sécurité de document particulière, le second facteur de probabilité correspondant au deuxième paramètre de poids.

6. Procédé selon l'une quelconque des revendications précédentes, comprenant en outre :
la détermination, par le système informatique, de la classification de sécurité de l'au moins un élément de données électroniques supplémentaire à l'aide du modèle de classification ;
la réception d'une validation, en provenance d'un validateur de données, que la classification de sécurité de l'au moins un élément de données électroniques supplémentaire déterminé à l'aide du modèle de classification est une classification de sécurité correcte par rapport à un contenu particulier de l'au moins un élément de données électroniques supplémentaire ; et
la fourniture, par le système informatique, de l'élément de données électronique classifié en vue de son affichage sur un dispositif informatique accessible par un utilisateur.

7. Procédé selon l'une quelconque des revendications précédentes, comprenant en outre :
la détermination, par le système informatique, de la classification de sécurité de l'au moins un élément de données électroniques supplémentaire à l'aide du modèle de classification, la classification de sécurité comportant au moins une classification de sécurité sensible, une classification de sécurité confidentielle, une classification de sécurité secrète ou une classification de sécurité top secret.

8. Procédé selon l'une quelconque des revendications précédentes, dans lequel les première et seconde métriques de précision sont déterminées, en fonction au moins en partie, d'une saisie manuelle fournie par au moins un validateur de données.

9. Instructions de programme d'ordinateur qui, lorsqu'elles sont exécutées par un ou plusieurs dispositifs de traitement, amènent les un ou plusieurs dispositifs de traitement à réaliser le procédé selon une ou plusieurs des revendications précédentes.

10. Système électronique (200 ; 400) pour établir et/ou ajuster des privilèges d'accès d'utilisateurs à des éléments de données électroniques, le système électronique comprenant :
un ou plusieurs dispositifs de traitement ;
un ou plusieurs dispositifs de stockage lisibles par machine stockant des instructions qui sont exécutables par les un ou plusieurs dispositifs de traitement pour réaliser des opérations comprenant :
la réception, par un système informatique (200 ; 400), d'une pluralité d'éléments de données électroniques (206), dans lequel la pluralité d'éléments de données électroniques comporte un document électronique pourvu d'une classification de sécurité de document et comprenant des données de contenu textuel et une pluralité d'attributs ;
la numérisation, par le système informatique, du document électronique pour identifier des données de contenu textuel associées à une classification de sécurité de document particulière ;
la génération, par le système informatique, d'un premier modèle d'inférence (112) en fonction des données de contenu textuel identifiées ;
la réception, par le système informatique, de métadonnées (114 ; 116) associées à des éléments de données électroniques respectifs de la pluralité d'éléments de données électroniques ;
la numérisation, par le système informatique, du document électronique à la recherche de métadonnées correspondant à un attribut particulier associé à la classification de sécurité de document particulier ;
la génération, par le système informatique, d'un second modèle d'inférence (118 ; 120) en fonction (i) des données de métadonnées reçues associées aux éléments de données électroniques respectifs, et (ii) de l'attribut particulier ;
la détermination, par le système informatique et en fonction du premier modèle d'inférence, d'un premier paramètre de poids associé aux données de contenu et basé sur une première métrique de précision associée au premier modèle d'inférence ;
la détermination, par le système informatique et en fonction du second modèle d'inférence, d'un deuxième paramètre de poids associé aux métadonnées et basé sur une seconde métrique de précision associée au second modèle d'inférence ;
la génération, par le système informatique et en fonction d'une combinaison particulière de paramètres de poids, d'un modèle de classification (126) permettant de déterminer une classification de sécurité d'au moins un élément de données électroniques supplémentaire ;
l'utilisation du modèle de classification pour déterminer une classification de sécurité d'au moins un élément de données électroniques supplémentaire ;
l'établissement et/ou l'ajustement d'au moins un privilège d'accès d'utilisateur à l'au moins un élément de données électroniques supplémentaire en fonction de la classification de sécurité ; et
le cryptage de l'au moins un autre élément de données électroniques en fonction de la classification de sécurité.

11. Système électronique selon la revendication 10, dans lequel les instructions sont exécutables par les un ou plusieurs dispositifs de traitement pour réaliser les opérations selon une ou plusieurs des revendications 2 à 8.
